## Europäisches Patentamt
## European Patent Office
## Office européen des brevets

(19)

(11) Veröffentlichungsnummer: **0 067 982**
**A2**

(12) # EUROPÄISCHE PATENTANMELDUNG

(21) Anmeldenummer: **82104786.7**

(22) Anmeldetag: **01.06.82**

(51) Int. Cl.³: **G 06 F 3/04**

(30) Priorität: **22.06.81 DD 230961**

(43) Veröffentlichungstag der Anmeldung:
**29.12.82 Patentblatt 82/52**

(84) Benannte Vertragsstaaten:
**DE FR GB IT**

(71) Anmelder: **VEB Kombinat Robotron**
**Ernst-Thälmann-Strasse 7**
**DDR-9010 Karl-Marx-Stadt(DD)**

(72) Erfinder: **Matthes, Wolfgang, Dipl.-Ing.**
**Horst-Menzel-Strasse 33**
**DDR-9006 Karl-Marx-Stadt(DD)**

(74) Vertreter: **Kuborn, Walter et al,**
**Patentanwälte Kuborn & Dr. Paigen Mulvanystrasse 2**
**D-4000 Düsseldorf(DE)**

(54) **Mikrorechneranordnung, vorzugsweise für den Einsatz in Multimikrorechnersystemen.**

(57) Sie ist für den Einsatz in Multimikrorechnersystemen insbesondere für einen Bedien- und Service-Prozessor für EDV-Anlagen vorgesehen.

Sie besteht im wesentlichen aus einer CPU (1), die mit E/A-Schaltkreisen (5 ... 9) und einem ROM (10) über einen internen Daten- (2) und Adressenbus (3) verbunden ist. Dem internen Datenbus (2) sind über Koppelstufen (11, 20) weitere Busleitungen (12) sowie die Datenleitungen (21) des externen Bussystems nachgeordnet. An die weiteren Busleitungen (12) sind ein RAM (13), Steuerregister (14, 15), ein Busadressenregister (16) und Fehlerregister (18) angeschlossen, und sie sind mit Eingängen eines der E/A-Schaltkreise (9) verbunden. Weitere Merkmale beziehen sich auf Decodierschaltungen (22, 23, 24), eine Masteranforderungsschaltung (28), eine Vermittlungsschaltung (29), eine Wartesignalschaltung (4) und eine Ablaufsteuerschaltung (30) sowie auf Verbindungen der Steuer- (32) und Adressenleitungen (27) des externen Bussystems mit Schaltmitteln der Anordnung.

./...

Croydon Printing Company Ltd.

EP 0 067 982 A2

Fig.1

Patentanwälte
Dipl.-Ing. Walter Kuborn
Dipl.-Fhys Dr. Peter Palgen
4 Düsseldorf
Mulvanystraße 2
Telefon 632727

0067982

- 1 -

**Mikrorechneranordnung, vorzugsweise für den Einsatz in Multimikrorechnersystemen**

Die Erfindung betrifft eine Mikrorechneranordnung, vorzugsweise für den Einsatz in Multimikrorechnersystemen, bei denen derartige Anordnungen untereinander und mit anderen Einrichtungen über einen gemeinsamen Zeitmultiplexbus verbunden sind und die aus einer Verarbeitungseinheit (CPU), aus E/A-Schaltkreisen, aus Nur-Lese-Speichern (ROM) und aus Lese/Schreib-Speichern (RAM) besteht.

Anordnungen dieser Art können im Zusammenhang mit anderen Einrichtungen dazu benutzt werden, relativ komplexe digitale Systeme aufzubauen, beispielsweise periphere Geräte für EDV-Anlagen, kleine Rechnersysteme, Maschinensteuerungen und dergleichen. Ein charakteristisches Beispiel ist ein Bedien- und Service-Prozessor für EDV-Anlagen, der für eine Vielzahl von Funktionen eingerichtet ist, z. B. für die Kommunikation "Operator/Betriebssystem", für die Kommunikation "Wartungstechniker/Hardware", für die automatisierte Hardware-Diagnose, für die Ferndiagnose usw.

Es ist seit längerem bekannt, zur Lösung komplexer Aufgaben Systeme aus mehreren Rechneranordnungen aufzubauen. Dabei kann es sich sowohl um große EDV-Anlagen, um Minicomputer oder auch um Mikrorechner handeln.

Beispiele realisierter Systeme sind in dem Buch "Multiprocessors and parallel processing", COMTRE Corporation, Wiley 1974, enthalten.

Die Zusammenschaltung mehrerer Rechneranordnungen erfordert dabei nicht nur deren physische Verbindung untereinander, sondern auch Vorkehrungen in der Softwareorganisation. Dabei enthalten die Befehlslisten von EDV-Systemen oder auch von Minicomputern in der Regel einige spezielle Befehle zur Realisierung dieser Vorkehrungen. Ein Beispiel ist ein Befehl des Typs "TEST & SET", der folgende Operationen ausführt:

- Abfragen eines Bits in einer adressierten Speicherzelle
- Setzen des Bits, wenn es als "nicht gesetzt" vorgefunden wird bzw.
- Ausführen einer Verzweigung, wenn das Bit als gesetzt vorgefunden wird.

Während der Ausführung dieser Abläufe wird dabei durch die Hardware verhindert, daß eine andere Einrichtung zu der betreffenden Speicherzelle zugreift.

Die Befehlslisten der üblichen Mikroprozessorschaltkreisfamilien enthalten derartige Operationen nicht. Allerdings sind Mikrorechnersysteme kommerziell verfügbar, die die Kopplung mehrerer Mikrorechner erlauben. Ein viel benutztes System erlaubt die Kopplung über einen Zeitmultiplexbus, der einen "multi master"-Betrieb zuläßt. Dieses Bussystem ist in der Schrift von Rolander "Intel Multibus Interfacing", Applikationsschrift AP 28, INTEL 1977, dargestellt. Andere Systeme gestatten nur eine Kopplung über E/A-Schaltkreise, wie dies z. B. in dem Artikel "Multimikrorechnerkopplung über Ein- und Ausgabeports"(radio fernsehen elektronik, 29 (1980), Heft 8, S. 489 ff) beschrieben ist. Damit kann man zwar Multimikrorechnersysteme aufbauen, ist aber in der Wahl der Softwareorganisation vielen Einschränkungen unterworfen, so daß sich bestimmte an sich vorteilhafte Organisationsprinzipien nicht realisieren lassen.

In der Zeitschrift "Nachrichtentechnik", Heft 10, 1980, S. 400 - 402, ist beschrieben, wie eine Multimikrorechneranordnung durch zusätzliche Hardware "TEST & SET"-Operationen in einem allen Mikrorechnern gemeinsamen Speicherbereich ausführen kann. Dabei stellt allerdings die Notwendigkeit eines zentralen Speicherbereichs einen beträchtlichen Nachteil dar. Es ist zum einen nicht möglich, eine völlig reguläre Struktur einzuführen, bei der alle Einrichtungen in gleicher Weise an einen gemeinsamen Zeitmultiplexbus angeschlossen sind. Zum anderen vermindert ein zentraler Speicherbereich die Gesamtleistungsfähigkeit des Systems. Schließlich ist die Freizügigkeit bezüglich Hardwarekonfiguration und Softwareorganisation eingeschränkt. Die Nachteile der bekannten Lösungen laufen faktisch darauf hinaus, daß die Leistungsfähigkeit der Anordnung relativ eingeschränkt ist, so daß sich bestimmte anspruchsvollere Aufgaben nicht mit derartigen Mikrorechneranordnungen lösen lassen.

Die Aufgabe der Erfindung besteht darin, die Struktur einer Mikrorechneranordnung, die für die Verbindung mit anderen Anordnungen über einen gemeinsamen Zeitmultiplexbus ausgebildet ist, sowie die spezifischen internen Schaltmittel anzugeben, die die Implementierung effektiver Softwareorganisationsformen bei größtmöglicher Freizügigkeit der Hardwarekonfiguration und Softwareorganisation im Rahmen einer Multimikrorechneranordnung gestattet.

Die Mängel der bekannten Lösungen haben ihre Ursache darin, daß spezielle zusätzliche Schaltmittel fehlen, so daß eine wesentliche Einschränkung in der Wahl der Softwareorganisation und eine beträchtliche Leistungsminderung der Gesamtanordnung die Folge ist, oder daß Schaltmittel zentral angeordnet sind, wodurch die Freizügigkeit der Konfiguration eingeschränkt wird.

Erfindungsgemäß wird die Aufgabe dadurch gelöst, daß zwischen dem internen Datenbus und den Koppelstufen für die Datenleitungen des externen Bussystems Busleitungen angeordnet sind, an die neben dem RAM zusätzlich Steuerregister, ein Busadressenregister sowie ein Fehlerregister angeschlossen sind und die an einen externen Anschluß geführt sind, daß diese Busleitungen mit Eingängen eines der E/A-Schaltkreise verbunden sind, daß die Koppelstufen für die Adressenleitungen des externen Bussystems in ihren niederen Positionen mit Teilen des internen Adressenbus und in ihren höheren Positionen mit Teilen des Busadressenregisters beschaltet sind, daß den Adresseneingängen des RAM eine Auswahlschaltung vorgeordnet ist, die mit Ausgangssignalen der Koppelstufen sowie mit Teilen des internen Adressenbus verbunden ist, daß dieser Auswahlschaltung weiterhin eine Decodierschaltung nachgeordnet ist, an die die Auswahlsignale des RAM sowie der genannten Register angeschlossen sind, daß der CPU eine Wartesignalschaltung vorgeordnet ist, die mit Ausgangssignalen einer am internen Adressenbus angeschlossenen Decodierschaltung, die sowohl mit der Masteranforderungsschaltung als auch mit der Vermittlungsschaltung verbunden ist, mit Ausgangssignalen der Vermittlungsschaltung sowie der Ablaufsteuerschaltung, mit Teilen der Steuerregister sowie über Koppelstufen mit Teilen der Steuerleitung des externen Bussystems und mit Wartesignalen eines Teiles der E/A-Schaltkreise beschaltet ist, daß weitere Teile der Steuerregister mit der Ablaufsteuerschaltung verbunden sind und daß dem Fehlerregister Fehlererkennungsschaltungen, eine Speicherschutzeinrichtung sowie Steuersignale der Vermittlungsschaltung vorgeschaltet sind.

Vorzugsweise ist die der Auswahlschaltung nachgeordnete
Decodierschaltung derart ausgebildet, daß disjunktive
Verbindungen von Auswahlsignalen eines Teils der
Steuerregister und des Busadressenregisters und von
Auswahlsignalen für definierte Speicherplätze des RAM
vorgesehen sind. Die Vermittlungsschaltung ist als
Prioritätsvermittlung ausgebildet,und deren Ausgängen
ist eine der Fehlererkennungsschaltungen nachgeordnet,
und diese ist als Koinzidenzdetektor für die Ausgangssignale der Vermittlungsschaltung ausgebildet.

Die Wartesignalschaltung ist derart ausgebildet, daß
das Wartesignal für die CPU durch die disjunktive Verknüpfung der Ausgangssignale von vier Flipflops und
dem Wartesignal eines Teiles der E/A-Schaltkreise gebildet wird, wobei zwei der genannten Flipflops mit
Teilen der Steuerleitungen des externen Bussystems beschaltet sind, daß in den Verbindungen dieser zwei
Flipflops zum Wartesignal der CPU eine konjunktive
Verknüpfung mit einer Bitposition eines der Steuerregister angeordnet ist, daß die beiden anderen Flipflops mit Ausgangssignalen der Decodierschaltung beschaltet sind, daß das erste dieser Flipflops mit den
Antwort- und Bestätigungssignalen der Steuerleitungen
des externen Bussystems beschaltet ist und daß das
zweite dieser Flipflops mit Ausgangssignalen der Vermittlungsschaltung und der Ablaufsteuerschaltung
verbunden ist.
Die Verbindungen zwischen den Steuerregistern und der
Ablaufsteuerschaltung sind derart ausgebildet, daß
eine Verknüpfung einer Bitposition eines der Steuerregister mit einem Eingangssignal eines Flipflops vorgesehen ist, dem das Freigabesignal der Steuerleitungen des externen Bussystems nachgeschaltet ist. Die Koppelstufen für die Verbindung zwischen dem Datenbus der CPU, den Busleitungen und den Datenleitungen des externen Bussystems sind derart ausgebildet, daß den Steuereingängen der ersten Koppelstufe das Schreibsteuersignal der CPU sowie Steuersignale der Masteranforderungsschaltung und der Vermittlungsschaltung vorgeschaltet sind und daß die Steuereingänge der zweiten Koppelstufe mit dem Schreibsteuersignal der CPU in konjunktiver Verknüpfung mit dem Steuersignal der Masteranforderungsschaltung sowie mit dem damit disjunktiv verknüpften Lesesteuersignal bei Slavezugriffen des externen Bussystems und mit der disjunktiven Verknüpfung von Steuersignalen der Masteranforderungsschaltung und der Vermittlungsschaltung beschaltet sind.

Die Rücksetzsignale für die Hardware der Anordnung sind derart ausgestaltet, daß alle Schaltmittel einschließlich des ersten Steuerregisters an eine Rücksetzleitung angeschlossen sind, die mit dem externen Bussystem und dem diagnostischen Anschluß verbunden ist und daß alle Schaltmittel mit Ausnahme des ersten Steuerregisters an ein weiteres Rücksetzsignal angeschlossen sind, das aus der konjunktiven Verknüpfung des Slaveanforderungssignals aus dem Adressenvergleicher mit einer weiteren Rücksetzleitung des externen Bussystems gebildet wird.

Im folgenden Ausführungsbeispiel zeigen:

Fig. 1 das Blockschaltbild der erfindungsgemäßen Mikrorechneranordnung,

Fig. 2 die allgemeine Struktur der CPU-Adresse,

Fig. 3 die Struktur der CPU-Adresse für den ROM-Zugriff,

Fig. 4 die Struktur der CPU-Adresse für den RAM-Zugriff,

Fig. 5 die Struktur der CPU-Adresse für den Registerzugriff,

- 7 -

Fig. 6 die Adressenstruktur für den Buszugriff,

Fig. 7 die Belegung des CONTROL-Registers,

Fig. 8 die Belegung des DIAG MODE-Registers,

Fig. 9 die Belegung des BUS ADRS-Registers,

Fig. 10 die Belegung des DIAG OUTPUT-Registers,

Fig. 11 die Ansicht des Diagnoseadapters,

Fig. 12 die Belegung des HDW ERROR-Registers,

Fig. 13 eine detaillierte Darstellung der Belegung des RAM mit den Kopien einiger Hardwareregister,

Fig. 14 Decodierschaltungen, die an den CPU-Adressenbus angeschlossen sind,

Fig. 15 den Aufbau der Wartesignalschaltung,

Fig. 16 die Struktur der Mastersteuerschaltung,

Fig. 17 die Erkennung von Slaveanforderungen,

Fig. 18 den Aufbau der Vermittlungsschaltung,

Fig. 19 den Aufbau der Ablaufsteuerschaltung,

Fig. 20 einen Teil der Decodierschaltung mit einem vorgeordneten Teil der Auswahlschaltung,

Fig. 21 Verbindungen zwischen Datenbusleitungen der CPU, weiteren Busleitungen und den Datenleitungen des externen Bussystems über Koppelstufen,

Fig. 22 die Beschaltung der Koppelstufen für die niederen 16 Bits der Adressenleitungen des externen Bussystems,

Fig. 23 die Beschaltung von Teilen der Koppelstufen für wesentliche Teile der Steuerleitungen des externen Bussystems,

Fig. 24 die Wirkungsweise der Speicherschutzeinrichtung,

Fig. 25 die Ausgestaltung einer Fehlererkennungsschaltung,

Fig. 26 die Ausgestaltung des Refreshadressenzählers im Zusammenhang mit einer weiteren Fehlererkennungsschaltung,

Fig. 27 die Beschaltung des HDW ERROR-Registers und die Bildung des Gesamtfehlersignals.

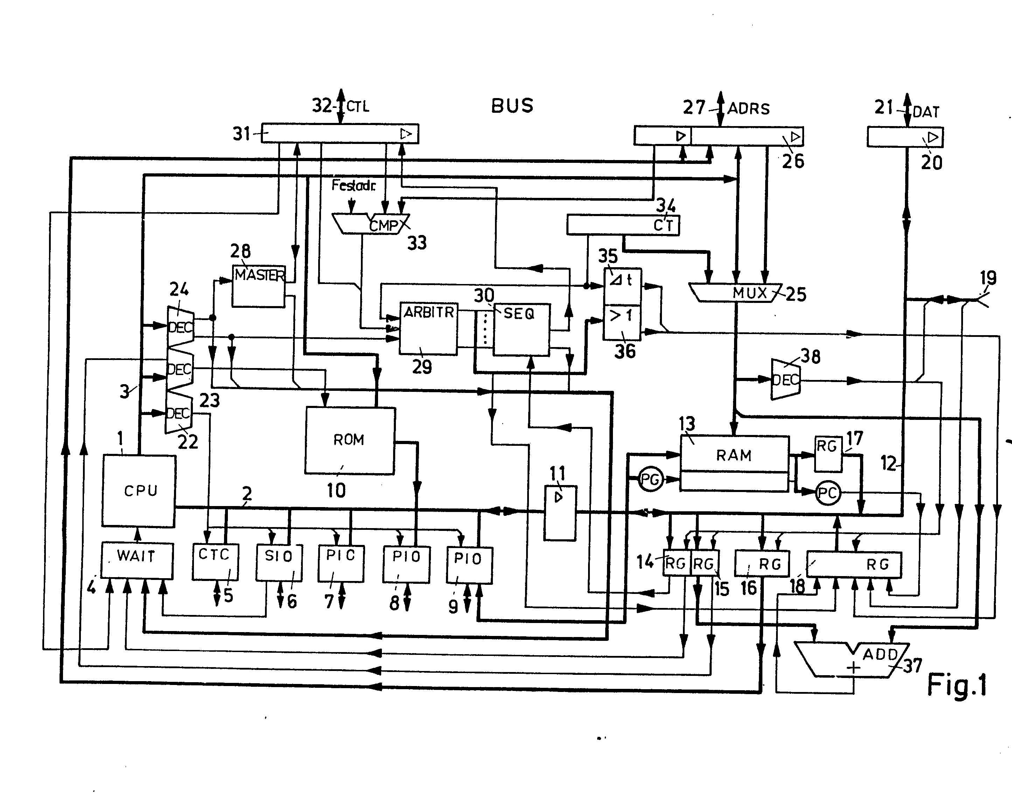

Fig. 1 zeigt das Blockschaltbild der Mikrorechneranordnung. Es ist eine Verarbeitungseinheit 1 (im folgenden als CPU bezeichnet) vorgesehen, die an einen internen Datenbus 2 und an einen internen Adressenbus 3 angeschlossen ist. Dem WAIT-Eingang der CPU 1 ist eine Wartesignalschaltung 4 vorgeordnet.

Neben den internen Busleitungen 2, 3 sind der CPU 1 noch Steuerleitungen nachgeschaltet, die mit den verschiedenen Komplexen der Anordnung verbunden sind. Diese Verbindungen sind in Fig. 1 nicht dargestellt.

Der interne Datenbus 2 ist mit den E/A-Schaltkreisen CTC 5, SIO 6, PIO 7, 8, 9 sowie mit einem Nur-Lese-Speicher 10 (im folgenden als ROM bezeichnet) verbunden. Weiterhin ist eine Koppelstufe 11 nachgeschaltet, an die Busleitungen 12 angeschlossen sind.

Mit den Busleitungen 12 sind eingangsseitig verbunden:

- ein Lese/Schreib-Speicher 13 (im folgenden als RAM bezeichnet),
- zwei Steuerregister 14, 15, wobei das Steuerregister 14 als DIAG MODE-Register und das Steuerregister 15 als CONTROL-Register bezeichnet werden,
- ein Busadressenregister 16 (im folgenden als BUS ADRS-Register bezeichnet),
- ein byte-paralleler Eingangsport des E/A-Schaltkreises (PIO) 9.

Weiterhin sind mit den Busleitungen 12 ausgangsseitig verbunden:

- ein RAM-Ausgangsregister 17, das den Datenausgängen des RAM 13 nachgeschaltet ist,
- ein Fehlerregister 18 (im folgenden als HDW ERROR-Register bezeichnet).

Schließlich sind die Busleitungen 12 an einen extern zugänglichen diagnostischen Anschluß 19 geführt und über eine Koppelstufe 20 an die Datenleitungen 21 des externen Bussystems angeschlossen.

An verschiedene Teile des internen Adressenbus 3 sind
angeschlossen:
- eine Decodierschaltung 22, die mit den E/A-Schaltkreisen 5, 6, 7, 8, 9 verbunden ist,
- eine Decodierschaltung 23, die dem ROM 10 vorgeschaltet ist und die zusätzlich eingangsseitig mit einer
  Bitposition des CONTROL-Registers 15 verbunden ist,
- eine Decodierschaltung 24,
- die Adresseneingänge des ROM 10,
- eine Auswahlschaltung 25, die den Adresseneingängen
  des RAM 13 vorgeordnet ist,
- eine Koppelstufe 26, an die die Adressenleitungen 27
  des externen Bussystems angeschlossen sind.
Zur Steuerung und Koordinierung der internen Abläufe
und der Steuerfolgen des externen Bussystems sind eine
Mastersteuerschaltung 28, eine Vermittlungsschaltung 29
und eine Ablaufsteuerschaltung 30 vorgesehen. Dabei
sind sowohl die Mastersteuerschaltung 28 als auch die
Vermittlungsschaltung 29 mit der Decodierschaltung 24
und über Teile von Koppelstufen 31 mit einigen der
Steuerleitungen 32 des externen Bussystems verbunden.
Einige der Ausgangssignale der Ablaufsteuerschaltung
30 sind über weitere Teile der Koppelstufen 31 ebenfalls an Steuerleitungen 32 des externen Bussystems angeschlossen. Im Detail sind die Verbindungen des externen Bussystems zu der Vermittlungsschaltung 29 derart
ausgeführt, daß ein Adressenvergleicher 33 zwischengeschaltet ist, der weiterhin mit Teilen der Koppelstufe 26 verbunden ist.
Die Ablaufsteuerschaltung 30 ist weiterhin mit einer
Bitposition des DIAG MODE-Registers 14 verbunden.
Es ist ein Refreshadressenzähler 34 vorgesehen und der
Auswahlschaltung 25 vorgeschaltet. Ein Ausgangssignal
des Refreshadressenzählers 34 ist an die Vermittlungsschaltung 29 angeschlossen. Außerdem ist diesem Ausgangssignal eine Fehlererkennungsschaltung 35 nachgeordnet.

Die Fehlererkennungsschaltung 35, eine weitere Fehlererkennungsschaltung 36 sowie eine Speicherschutzeinrichtung 37 sind an das HDW ERROR-Register 18 angeschlossen. Zusätzlich ist dem HDW ERROR-Register ein Signal
des diagnostischen Anschlusses 19 vorgeschaltet. Die
Register 14, 15, 16, 18 sowie der diagnostische Anschluß 19 sind mit jeweils einem Ausgangssignal einer
Decodierschaltung 38 verbunden, die der Auswahlschaltung 25 nachgeordnet ist.

Die Wartesignalschaltung 4 ist angeschlossen an:
- Signale der Decodierschaltung 24, der Mastersteuerschaltung 28 und der Ablaufsteuerschaltung 30,
- Teile der Steuerleitungen 32 des externen Bussystems
  über Koppelstufen 31,
- eine Bitposition des DIAG MODE-Registers 14.

Die Anordnung ist auf Basis eines kommerziell erhältlichen Mikroprozessorsystems realisiert, wobei die
CPU 1 und die E/A-Schaltkreise 5 ... 9 jeweils einen
LSI-Schaltkreis eines solchen Systems darstellen. Für
viele derartige Systeme ist charakteristisch, daß der
interne Adressenbus 3 eine Breite von 18 Bit und der
bidirektional ausgelegte interne Datenbus 2 eine
Breite von 8 Bit (1 Byte) haben. Weiterhin liefert
die CPU 1 die Anforderungs- und Steuersignale für den
Informationstransport über die Busleitungen 2, 3
(Speicheranforderung, E/A-Anforderung, Lesen, Schreiben). Auch ist charakteristisch, daß ein Wartesignaleingang (WAIT) vorgesehen ist, durch dessen Erregung
ein Steuerzyklus der CPU so lange aufgehalten werden
kann, bis bestimmte externe Bedingungen erfüllt sind.
Zur Programm- und Datenspeicherung sind der ROM 10 mit
einer Kapazität von max. 4 kBytes und der RAM 13 mit
einer Kapazität von max. 32 kBytes vorgesehen, wobei der RAM 13 mit dynamischen 16 kBit-MOS-Speicherschaltkreisen realisiert ist. Die Anordnung ist zum Anschluß an ein externes Bussystem vorgesehen, das folgende charakteristische Eigenschaften aufweist:

- Zeitmultiplex organisierte Informationsübertragung nach dem Master/Slave-Prinzip,
- Vorkehrungen für Multimasterbetrieb (d. h., es kann prinzipiell jede der angeschlossenen Einrichtungen als Master aktiv werden),

Parallele Übertragung von Adressen, Daten und Steuersignalen.

Als Master kann eine Einrichtung Zugriffe zu Speicherpositionen und Register einer ausgewählten anderen Einrichtung ausführen. Wird eine Einrichtung als Slave ausgewählt, so muß sie es ermöglichen, daß der Zugriff seitens des externen Bussystems ausgeführt wird, ohne die internen Abläufe prinzipiell (mit Ausnahme einer eventuellen zeitlichen Verzögerung) zu beeinträchtigen. In der Anordnung sind der RAM 13 und die Register 14, 15, 16, 18 für Slavezugriffe zugänglich. Weiterhin ist es möglich, Information in den Teil des E/A-Schaltkreises (PIO) 9 einzuschreiben, der an die Busleitungen 12 angeschlossen ist. Die detaillierte Struktur des externen Bussystems kann in relativ weiten Grenzen gewählt werden. Es ist möglich, ein an sich bekanntes Bussystem einzusetzen, wobei u. U. einige zusätzliche Steuerleitungen eingeführt werden müssen.

Ein derartiges Bussystem ist z. B. in der Schrift von Rolander, "Intel Multibus Interfacing", Applikationsschrift AP 28, INTEL 1977, dargestellt.

Besonders vorteilhaft gestaltet sich der Einsatz eines Bussystems, wie es in der DD-Anmeldung "Bussystem zur Verbindung von logischen Funktionsmoduln" (WP G06f/ 227 967/4) beschrieben ist. Die weitere Beschreibung wird sich auf dieses Bussystem beziehen. Ein komplexes System kann dadurch aufgebaut werden, daß mehrere Mikrorechneranordnungen zusammen mit anderen Einrichtungen an das Bussystem angeschlossen werden.

Damit ergeben sich vielfältige Möglichkeiten für die Implementierung komplexer Aufgaben:

- Jede Mikrorechneranordnung kann unabhängig voneinander Programme abarbeiten.

- Dabei kann jede Mikrorechneranordnung auf den gesamten Adressenraum des Bussystems zugreifen; insbesondere zu den RAMs 13 der anderen Mikrorechneranordnungen.

- "Kleinere" periphere Einrichtungen (z. B. Seriendruckwerke, Floppy Disc-Einheiten u. a.) können direkt von den Mikrorechneranordnungen aus gesteuert werden (durch Anschluß an die E/A-Schaltkreise 5 ... 9).

- "Größere"periphere Einrichtungen oder komplexe Interfaces können von speziellen Einrichtungen angesteuert werden, die an das Bussystem angeschlossen sind.

- Es können effektive Softwareorganisationsformen implementiert werden. So ist es möglich, folgende Funktionen vorzusehen:

    . Synchronisieren zwischen verschiedenen Prozessen
    . Auslösen von Ereignissen
    . Reservieren bzw. Freigeben von Ressourcen
    . Starten bzw. Beenden parallel ablaufender Prozesse.

- Es sind Fehlererkennungs- und Diagnosemöglichkeiten in einem Umfang vorgesehen, wie dies für Mikrorechneranordnungen bisher nicht üblich war.

Im folgenden werden zunächst die funktionellen Eigenschaften der Anordnung anhand der Adressierungsstrukturen und Registerbelegungen dargestellt.

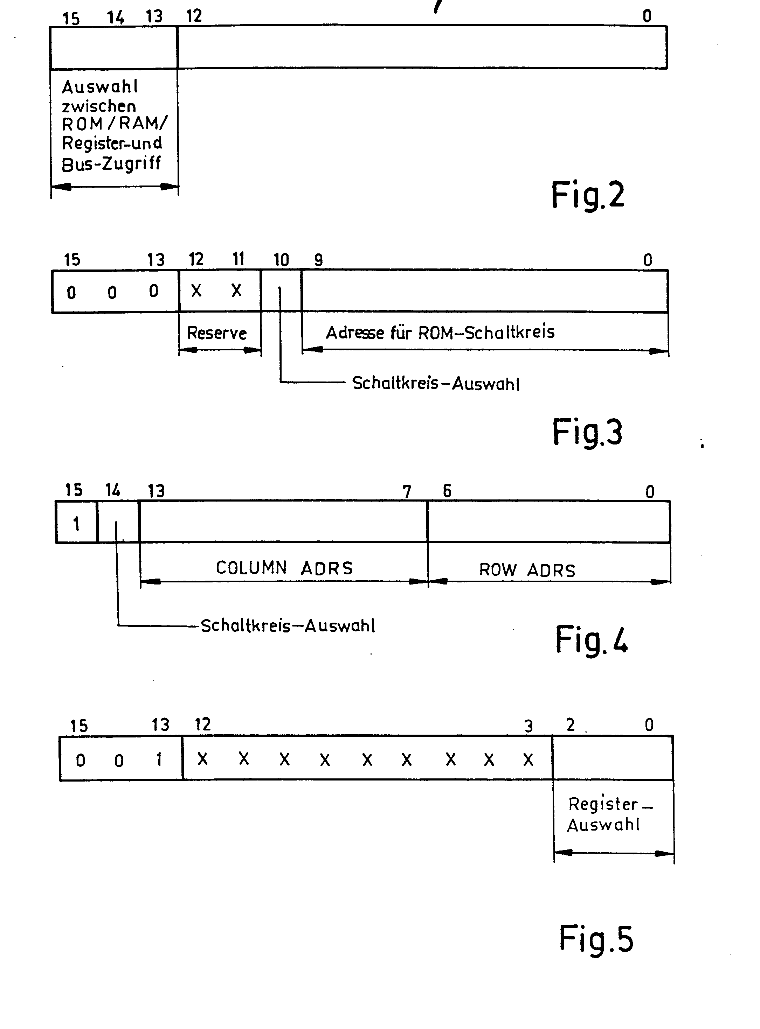

Dazu zeigt Fig. 2 die allgemeine Struktur der CPU-Adresse, wie sie von der CPU 1 bei Speicherzugriffen über den internen Adressenbus 3 signalisiert wird.

Die höchstwertigen 3 Bits werden dazu benutzt, eine der Einrichtungen

- ROM 10
- RAM 13
- Register 14, 15, 16, 18
- externes Bussystem

für den aktuellen Zugriff auszuwählen.

Fig. 3 zeigt die Struktur der CPU-Adresse für den ROM-Zugriff. In der Anordnung hat der ROM 10 eine Gesamtkapazität von 4 kBytes, realisiert durch 4 MOS-Schaltkreise zu je 1 kByte. Dabei gestattet die CPU-Adresse die Adressierung von 2 kBytes, d. h. von 2 MOS-Schaltkreisen. Die Auswahl, welcher der beiden physisch installierten 2k-Bereiche adressiert wird, wird durch eine Bitposition des CONTROL-Registers 15 bestimmt. Die Adressenbits 12, 11 sind reserviert und können dazu benutzt werden, die Kapazität eines ROM-Speichers auf 8 kBytes zu erhöhen, falls Schaltkreise mit entsprechend höherer Kapazität zum Einsatz gelangen. Insgesamt kann der ROM 10 16 kBytes umfassen.

Fig. 4 zeigt die Struktur der CPU-Adresse für den RAM-Zugriff. Der RAM 13 hat eine Kapazität von 32 kBytes, die mit dynamischen 16 kBit-MOS-Schaltkreisen realisiert ist. Diese Schaltkreise verlangen die zeitmultiplexe Zuführung der Adresse in Form von 27-Bit-Abschnitten (ROW ADRS, COLUMN ADRS). Es sind 18 Schaltkreise installiert, wobei pro Byte ein Paritätsbit mitgeführt wird. Dazu sind dem RAM 13 die entsprechenden Paritätsgenerator- und Paritätskontrollschaltungen (PG, PC) beigeordnet. Diese Bitposition pro Byte kann in einem speziellen Modus unter Steuerung durch das DIAG MODE-Register 14 und das CONTROL-Register 15 für diagnostische Zwecke benutzt werden, um einen "Vergleichsstop" auszulösen.

Fig. 5 zeigt die Struktur der CPU-Adresse für den Registerzugriff. Die einzelnen Register sind wie folgt adressiert:

| Adresse | Register |
|---------|----------|
| 2000H | CONTROL-Register 15 |
| 2001H | DIAG MODE-Register 14 |
| 2002H | BUS ADRS-Register 16 |
| 2003H | DIAGNOSTIC OUTPUT-Register |
| 2006H | DIAGNOSTIC INPUT-Register |
| 2007H | HDW ERROR-Register 18 |

Die DIAGNOSTIC INPUT- und DIAGNOSTIC OUTPUT-Register sind in der Anordnung selbst nicht enthalten. Es ist vielmehr vorgesehen, daß sich diese Register auf einer externen Einrichtung ('Diagnoseadapter') befinden, die an den diagnostischen Anschluß 19 angesteckt werden kann. Die Anordnung ist dazu derart ausgestaltet, daß die entsprechenden Registerauswahlsignale zum diagnostischen Anschluß 19 geführt sind.

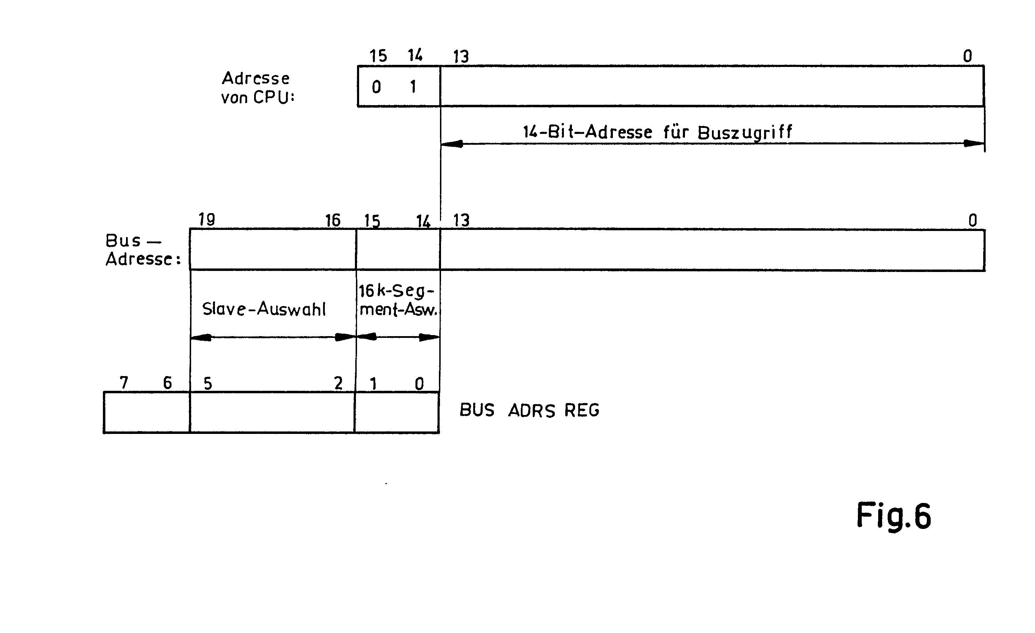

Fig. 6 zeigt die Adressenstruktur für den Buszugriff. Um eine Masteranforderung für das externe Bussystem zu stellen, müssen die höchstwertigen 2 Bits der CPU-Adresse die Belegung 0, 1 haben, so daß mit den niederen 14 Bits ein Segment von max. 16 kBytes in einer anderen Einrichtung adressiert werden kann.

Das externe Bussystem selbst erfordert eine 20-Bit-Adresse. Da die CPU 1 nur die niederen 14 Bits liefern kann, werden die restlichen 6 Bits durch die Belegung des BUS ADRS-Registers 16 geliefert. Dabei dienen die höchstwertigen 4 Bits zur Auswahl des Slave am Bus, und mit den folgenden 2 Bits wird eines von max. 4 16kByte-Segmenten in der Slaveeinrichtung ausgewählt.

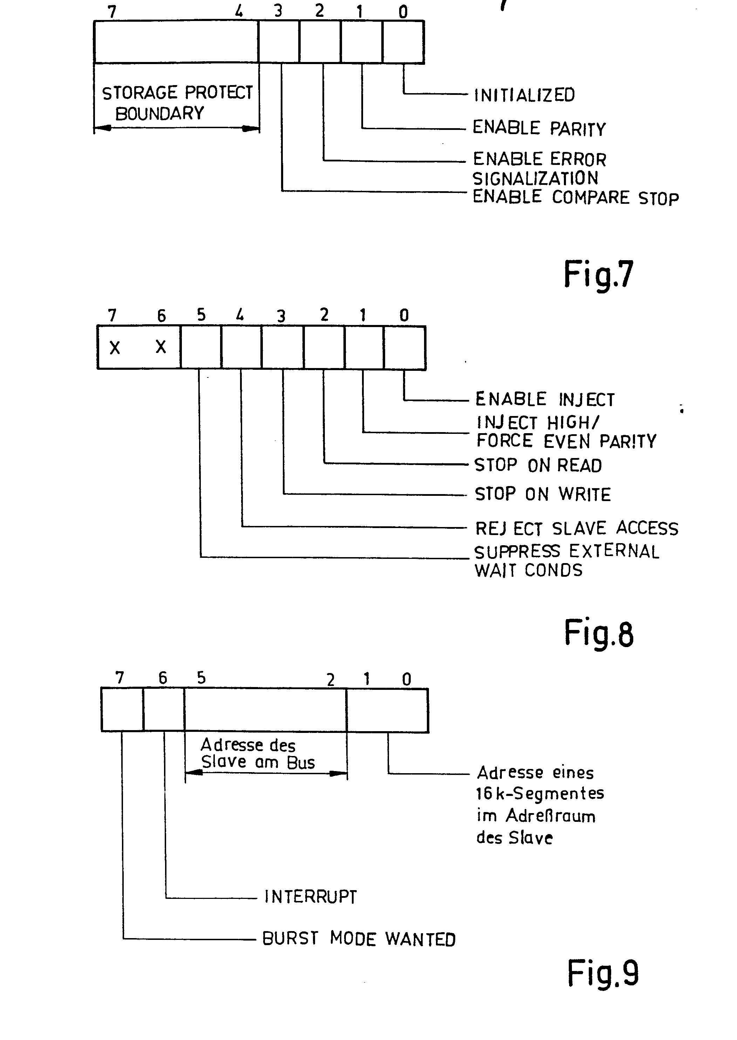

Fig. 7 zeigt die Belegung des CONTROL-Registers 15:
- INITIALIZED.

Dieses Bit dient zur Auswahl eines der beiden Bereiche des ROM 10. Nach dem Rücksetzen der Anordnung ist INITIALIZED = 0. Damit beginnt die Programmbearbeitung von Adresse 0 des ersten ROM-Bereiches. Es wird sich in der Regel um diagnostische Programme handeln. Wurden diese Programme erfolgreich abgearbeitet, so wird INITIALIZED eingeschaltet, so daß aus dem zweiten ROM-Bereich Anwendungs- und Dienstprogramme abgearbeitet werden können. Das Einschalten geschieht dadurch, daß eine Softwareroutine im ersten ROM-Bereich eine entsprechende Routine in den RAM 13 lädt und dann zu dieser verzweigt. Diese Routine lädt das CONTROL-Register 15 und kann dann eine Verzweigung zu Programmen ausführen, die im anderen ROM-Bereich resident sind. So können prinzipiell neben maximal 8 kBytes an Anwendungs- und Dienstprogrammen (im zweiten ROM-Bereich) weitere maximal 8 kBytes an Diagnoseprogrammen installiert werden, die die Anordnung nach dem Einschalten weitgehend auf Funktionsfähigkeit prüfen.

- ENABLE PARITY.

Die Paritätskontrolle am RAM 13 wird zugelassen bzw. unterdrückt.

- ENABLE ERROR SIGNALIZATION.

Das Signalisieren interner Fehlerbedingungen über das externe Bussystem wird zugelassen bzw. unterdrückt.

- ENABLE COMPARE STOP.

Der hardwareseitig realisierte Adressenvergleichsstop wird zugelassen bzw. unterdrückt. Dieses Bit darf nicht gleichzeitig mit dem Bit ENABLE PARITY gesetzt sein.

- STORAGE PROTECT BOUNDARY.

Diese 4 Bits geben die obere Grenze des Bereiches im RAM 13 an, der gegen Beschreiben geschützt ist.

Fig. 8 zeigt die Belegung des DIAG MODE-Registers 14. Die Bits 3 ... 0 sind für die Adressenvergleichsstopeinrichtung am RAM 13 vorgesehen. Die Bits 5, 4 dienen der Steuerung der Kommunikation über das externe Bussystem:

- REJECT SLAVE ACCESS.

Ist dieses Bit gesetzt, so werden alle Versuche, die Anordnung über das externe Bussystem als Slave zu adressieren, abgewiesen. Das heißt, die Anordnung löst bei Auswahl als Slave die Rückweisungs- bzw. Freigabefolge des betreffenden Bussystems aus.

Im Falle des bevorzugt verwendeten Bussystems wird dazu die Leitung RELEASE erregt.

In der Zeit, in der das Bit gesetzt ist, lassen sich intern Abläufe der Art "TEST & SET" oder ähnliche ausführen, ohne daß dies durch externe Zugriffe gestört wird.

- SUPPRESS EXTERNAL WAIT CONDS.

Ist dieses Bit gesetzt, so werden Wartezustände unterdrückt, die in der CPU 1 über die Wartesignalschaltung 4 von einigen der Steuerleitungen 34 des externen Bussystems hervorgerufen werden können. Dies ist in den Situationen erforderlich, wo ein Anhalten der Befehlsausführung zu inkorrekten Resultaten führt. Charakteristisch ist z. B. die Steuerung des Datenaustausches mit einem Floppy Disc-Laufwerk, das an einige der E/A-Schaltkreise 5 ... 9 angeschlossen ist. Infolge der relativ hohen Datenrate würde bei längeren Wartezuständen ein Datenverlust auftreten.

Fig. 9 zeigt die Belegung des BUS ADRS-Registers 16. Die beiden niedrigstwertigen Bits geben die Adresse eines von 4 Segmenten im Adressenraum der auszuwählenden Slave-Einrichtung an. Jedes dieser Segmente darf maximal 16 kBytes umfassen. Die folgenden 4 Bits geben die Adresse der auszuwählenden Slaveeinrichtung am externen Bussystem an.

Bit 6 (INTERRUPT) kennzeichnet, daß in der auszuwählenden Slaveeinrichtung im folgenden Zyklus ein Interrupt ausgelöst werden soll. Welche Wirkung ein derartiger Interrupt in der jeweiligen Slaveeinrichtung veranlaßt, hängt vom Typ dieser Einrichtung ab. Handelt es sich dabei um eine erfindungsgemäße Anord-

nung, veranlaßt ein Interupt eine Informationsübertragung zu dem Teil des E/A-Schaltkreises (PIO) 9, der an die Busleitungen 12 angeschlossen ist. Der E/A-Schaltkreis 9 ist dazu üblicherweise so programmiert, daß diese Informationsübertragung einen Interrupt in der CPU 1 auslöst.

Bit 7 (BURST MODE WANTED) kennzeichnet, daß bei der nächsten Auswahl der Anordnung als Master diese die Informationsübertragung im "burst mode" ausführt, d. h., daß nachfolgend keine andere Einrichtung als Master ausgewählt wird, bis das BURST MODE WANTED-Bit ausgeschaltet wird. Das bevorzugt eingesetzte Bussystem hat eine spezielle Steuerleitung BURST MODE. Sollten andere Bussysteme nicht über eine äquivalente Möglichkeit verfügen, so kann in vielen Fällen eine zusätzliche Busleitung dafür vorgesehen werden.

Im Zusammenhang mit der erfindungsgemäßen Anordnung hat eine solche Betriebsart drei Aufgaben:

1. Die Implementierung von Abläufen der Art "TEST & SET" oder ähnlicher im Rahmen von Speicherbereichen anderer Einrichtungen. Dies ist für Multicomputer-Betriebssystem-Organisationen von wesentlicher Bedeutung.

2. Die kurzzeitige Reservierung von speziellen Einrichtungen. Sind in einem System spezielle Einrichtungen vorhanden, die von mehreren anderen Einrichtungen benutzt werden können, entsteht das Problem der Reservierung. Dies kann z. B. auf Softwarebasis gelöst werden. Dauert die jeweilige Belegung einer derartigen Einrichtung etwa nur so lange wie der Datenaustausch mit dieser Einrichtung, läßt sich in vielen Fällen durch den "burst mode" der Reservierungseffekt ohne Software-"overhead" erzielen.

3. Beschleunigte Datenübertragung, da im "burst mode" die wiederholte Masterauswahl bei jedem Datenbyte entfällt.

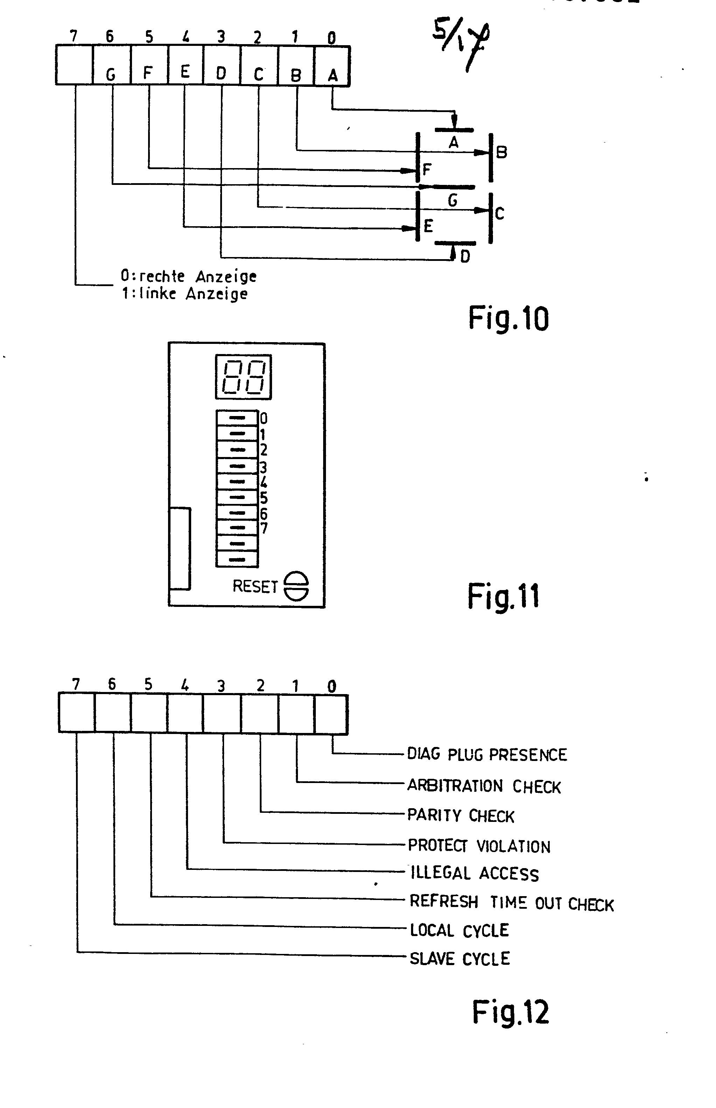

Fig. 10 zeigt die Belegung des DIAGNOSTIC OUTPUT-Registers.

Dazu zeigt Fig. 11 die Ansicht des Diagnoseadapters, wie er für das Anstecken an den diagnostischen Anschluß 19 vorgesehen ist. Er enthält zwei 7-Segment-Leuchtanzeigen mit den dazugehörigen Registern für die Ansteuerung. Diese Register werden durch ein Schreiben auf die Adresse 2003H geladen, und zwar bei Datenbitposition 7 = 0 das für die rechte Anzeige und bei Datenbitposition 7 = 1 das für die linke Anzeige. Die Ansteuersignale für die Anzeige werden gemäß Fig. 10 direkt geliefert. Weiterhin enthält der Diagnoseadapter mehrere Schalter, von denen 8 über Lesezugriffe mit der Adresse 2006H (DIAGNOSTIC INPUT-Register) von der Software abgefragt werden können. Eine weitere wesentliche Einrichtung des Diagnoseadapters ist ein manuell auslösbarer Geber für Rücksetzimpulse (RESET), der als Sensorelement realisiert ist. Im wesentlichen dient der Diagnoseadapter dazu, diagnostische Programme auszulösen und Resultate diagnostischer Überprüfungen anzuzeigen. Die zugehörigen Programme sind vorzugsweise in jenem Teil des ROM 10 untergebracht, der durch INITIALIZED = 0 (Bit 0 des CONTROL-Registers 15) ausgewählt wird. Durch Betätigen des RESET-Sensorelementes wird INITIALIZED = 0 erzwungen, so daß eine ab Adresse 0 des genannten ROM-Teils beginnende Routine die Schalterpositionen des DIAGNOSTIC INPUT-Registers abfragen und zum gewünschten diagnostischen Ablauf verzweigen kann.

Fig. 12 zeigt die Belegung des HDW ERROR-Registers 18:

- DIAG PLUG PRESENCE kennzeichnet, ob der Diagnoseadapter am diagnostischen Anschluß 19 angesteckt ist oder nicht.
- ARBITRATION CHECK ist das Fehlersignal der Fehlererkennungsschaltung 36, die der Vermittlungsschaltung 29 nachgeordnet ist.
- PARITY CHECK ist das Fehlersignal der Paritätsprüfung am RAM 13.
- PROTECT VIOLATION ist das Fehlersignal der Speicherschutzeinrichtung 37.

- ILLEGAL ACCESS ist ein Fehlersignal aus der Decodierschaltung 24.
- REFRESH TIME OUT CHECK ist das Fehlersignal der Fehlererkennungsschaltung 35, die dem Refreshadressenzähler 34 nachgeordnet ist.
- LOCAL CYCLE, SLAVE CYCLE sind Statussignale der Vermittlungsschaltung 29. Sie sind für die detaillierte softwareseitige Fehlerbehandlung vorgesehen.

Für den Zugriff zu den Registern ist weiterhin kennzeichnend, daß für einige Register Kopien im RAM 13 geführt werden, d. h. die Hardware belegt bei einigen Registerzugriffen einige Positionen im RAM 13 derart, daß bei Schreibzugriffen gleichzeitig das Register und die korrespondierende RAM-Zelle beschrieben werden und daß beim Lesen nur zur RAM-Zelle zugegriffen wird. Damit können die Registerinhalte durch Bitmodifikation, Addition etc. von der Software mit jeweils einem einzigen Befehl modifiziert werden. Andererseits können die Register aus üblichen Schaltkreisen aufgebaut werden, die nicht über die Fähigkeit zum Zurücklesen verfügen. Es handelt sich um folgende Register:

| Registeradresse | RAM-Adresse | Register |
|---|---|---|
| 2000H | 8000H | CONTROL-Register 15 |
| 2001H | 8001H | DIAG MODE-Register 14 |
| 2002H | 8002H | BUS ADRS-Register 16 |
| 2003H | 8003H | DIAGNOSTIC OUTPUT-Register |

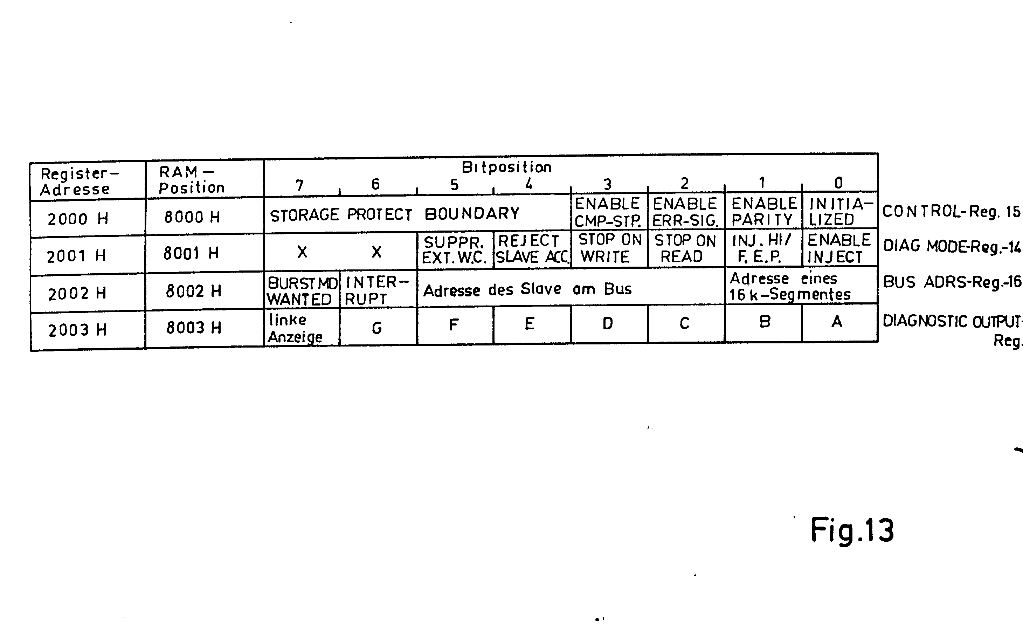

Fig. 13 gibt dazu eine detailliertere Darstellung. Trotz dieser automatischen Belegung von RAM-Positionen ist ein Zugang über die jeweilige RAM-Adresse möglich. Zum Beispiel veranlaßt ein Schreiben mit der Adresse 2001H das Laden sowohl des DIAG MODE-Registers 14 als auch der RAM-Zelle 8001H. Ein Schreiben mit der Adresse 8001H betrifft nur diese Zelle und nicht das korrespondierende Register.

Die Adressierung der E/A-Schaltkreise 5 ... 9 ist nicht näher ausgeführt, da sie im Rahmen der Konventionen des eingesetzten Mikroprozessorsystems beliebig definiert werden kann. Die folgende detailliertere Beschreibung der Anordnung ist in nachstehender Reihenfolge aufgebaut:

- Decodierschaltungen der CPU-Adresse
- Wartesignalschaltung 4
- Mastersteuerschaltung 28
- Schaltmittel für Slavezugriffe
- Vermittlungsschaltung 29
- Ablaufsteuerschaltung 30
- Schaltmittel für RAM- und Registerzugriffe
- Ankopplung an das externe Bussystem
- Mittel der Fehlererkennung.

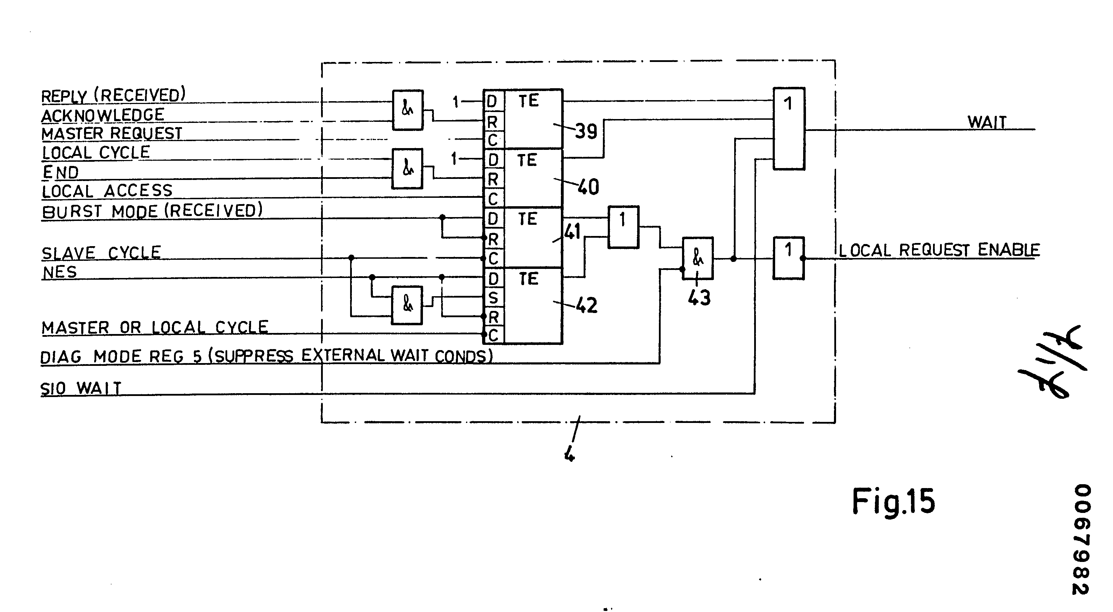

Fig. 14 zeigt die Decodierschaltungen 23, 24, die an den CPU-Adressenbus 3 angeschlossen sind.

Die Decodierschaltung 24 wird aktiv, sofern die CPU 1 ein Speicheranforderungssignal MREQ abgibt. Entsprechend den Adressendefinitionen in den Fig. 2 bis 6 werden alternativ abgegeben:

- ein Freigabesignal für die Decodierschaltung 23, die zur Auswahl der Schaltkreise des ROM 10 dient,
- ein Anforderungssignal MASTER REQUEST, wenn der Zugriff über das externe Bussystem geführt werden soll,
- ein Anforderungssignal LOCAL ACCESS, wenn der Zugriff eines der Register 14 ... 16, 18 bzw. den RAM 13 betrifft.

Die Ausgestaltung der Decodierschaltung 22 für die E/A-Schaltkreise 5 ... 9 ist nicht näher beschrieben, da sie weitgehend vom eingesetzten Mikroprozessorschaltkreissystem abhängt.

Es gehört zum Prinzip der Anordnung, daß der Komplex aus CPU 1, E/A-Schaltkreisen 5 ... 9, ROM 10 und den zugehörigen Decodierschaltungen weitestgehend gemäß den elementaren Zusammenschaltungsregeln des Mikroprozessorschaltkreissystems aufgebaut·ist, so daß dieser Komplex eine in sich funktionsfähige Mikrorechneranordnung darstellt. Sofern die CPU 1 lediglich auf einen der E/A-Schaltkreise 5 ... 9 bzw. den ROM 10 zugreift, werden die anderen Schaltmittel der Anordnung nicht für die Arbeit der CPU 1 benötigt. Im wesentlichen hat dieses Prinzip drei Vorteile:

1. Der beschriebene Komplex bildet einen ˈhard coreˈ, dessen Funktionsfähigkeit leicht überprüft werden kann und der danach in der Lage ist, mit ROM-residenten Programmen die verbleibende Anordnung zu prüfen.

2. Zeitkritische Steuerabläufe im Zusammenhang mit den E/A-Schaltkreisen 5 ... 9 können aus dem ROM 10 abgearbeitet werden, ohne daß dies durch Zugriffe seitens des externen Bussystems beeinträchtigt wird.

3. Die Behandlung von Interrupts erfolgt ausschließlich gemäß den Konventionen des eingesetzten Mikroprozessorschaltkreissystems ohne externe Zusatzbeschaltung. Durch entsprechende Einstellung der Interruptprioritäten der E/A-Schaltkreise 5 ... 9 und Laden der entsprechenden Interruptvektoren können sowohl Interrupts von direkt an die E/A-Schaltkreise angeschlossenen peripheren Einrichtungen als auch Interrupts, die über das externe Bussystem signalisiert werden (durch die Verbindung von E/A-Schaltkreis 9 mit den Busleitungen 12) in prinzipiell gleichartiger Weise und ohne zusätzlichen Hardwareaufwand behandelt werden.

Will die CPU 1 einen Zugriff außerhalb des beschriebenen Komplexes ausführen, so sind dafür weitere Steuerabläufe erforderlich. In der dafür benötigten Zeit wird die CPU 1 in einen Wartezustand gebracht. Dazu zeigt Fig. 15 den Aufbau der Wartesignalschaltung 4.

Die Anforderungssignale MASTER REQUEST, LOCAL ACCESS der Decodierschaltung 24 wirken direkt auf Flipflops 39, 40. Damit gelangt die CPU 1 sofort nach Abgabe der jeweiligen Anforderung in den Wartezustand. Der Wartezustand wird erst dann verlassen, wenn die betreffende Anforderung erfüllt ist. Dazu wird Flipflop 39 zurückgesetzt, wenn das externe Bussystem über die Antwortleitung REPLY und die Bestätigungsleitung ACKNOWLEDGE die Beendigung des Buszyklus signalisiert.

Flipflop 40 wird zurückgesetzt, wenn die Ablaufsteuerschaltung 30 in einem lokalen Zugriff (LOCAL CYCLE) das Endesignal (END) abgibt.

Im Zusammenhang mit speziellen Funktionen des externen Bussystems sind zwei weitere Flipflops 41, 42 vorgesehen, die in der CPU 1 unabhängig von der Befehlsausführung Wartezustände erzwingen können. Flipflop 41 veranlaßt einen Wartezustand, wenn über das externe Bussystem auf die Anordnung zugegriffen wird und wenn dabei die Busleitung BURST MODE aktiv ist. In dieser Situation muß für die Dauer der Erregung von BURST MODE die Befehlsausführung in der CPU 1 verhindert werden. Flipflop 41 schaltet mit dem Abfall des Steuersignales SLAVE CYCLE ein, d. h. es wird am Ende des ersten Buszyklus im BURST MODE aktiv. Flipflop 42 veranlaßt einen Wartezustand bei Erregung der Busleitung NES (NON EXECUTIVE STATE). Dies ist ein spezieller Zustand zur Fehlerbehandlung im Rahmen des gesamten Systems. Flipflop 42 ist derart beschaltet, daß bei erregter Busleitung NES der Wartezustand erzeugt wird

- am Ende eines CPU-Zugriffes auf Einrichtungen außerhalb der E/A-Schaltkreise 5 ... 9 und des ROM 10 (Abfall von MASTER OR LOCAL CYCLE),

- während eines Slavezugriffes (SLAVE CYCLE).

Wesentlich ist, daß die Ausgangssignale der Flipflops

41, 42 auf ein UND-Gatter 43 geführt sind, das mit der Bitposition 5 des DIAG MODE-Registers 14 verbunden ist. Damit kommen die entsprechenden Wartezustände nur dann zur Wirkung, wenn das besagte Bit = 0 ist. Ist das Bit gesetzt, so werden die externen Wartebedingungen verhindert. Damit können zeitkritische Funktionen (namentlich im Zusammenhang mit den E/A-Schaltkreisen 5 ... 9) gegen extern hervorgerufene Verzögerungen maskiert werden. Das Ausgangssignal des UND-Gatters 43 dient weiterhin in invertierter Form dazu, lokale Zugriffe zu den Registern 14 ... 16, 18 bzw. zum RAM 13 zu erlauben (LOCAL REQUEST ENABLE). Dies ist deshalb erforderlich, da die Ablaufsteuerung 30 nur dann einen Zyklus beginnen darf, wenn dieser in kurzer Zeit wieder beendet werden kann, da ansonsten der Zugriff zu der Anordnung völlig blockiert werden könnte. Somit darf kein lokaler Zyklus ausgelöst werden, wenn durch extern erzwungene Wartezustände die sofortige Beendigung dieses Zyklus verhindert wird. Weiterhin ist ein Signal SIO WAIT vorgesehen, das direkt mit dem WAIT-Signal der CPU 1 disjunktiv verknüpft ist. In diesem Signal sind die"wait"-Ausgänge derjenigen der E/A-Schaltkreise 5 ... 9, die über die Möglichkeit zum Betrieb im "wait"-Modus verfügen, nach dem "wired or"-Prinzip zusammengefaßt. Damit kann zur Steuerung peripherer Einrichtungen dieser Modus benutzt werden. Von besonderem Vorteil ist dies bei der schnellen Übertragung zusammenhängender Datenströme, da die Datenrate in diesem Modus praktisch direkt der Befehlsausführungsgeschwindigkeit entspricht und keine zusätzlichen Befehle für Organisationszwecke notwendig sind (im Gegensatz zum Interrupt- oder Abfrageprinzip).

Die entsprechenden Programme dazu werden aus dem ROM 10 abgearbeitet, so daß gleichzeitig mit diesem Datentransport andere Einrichtungen auf den RAM 13 zugreifen können.

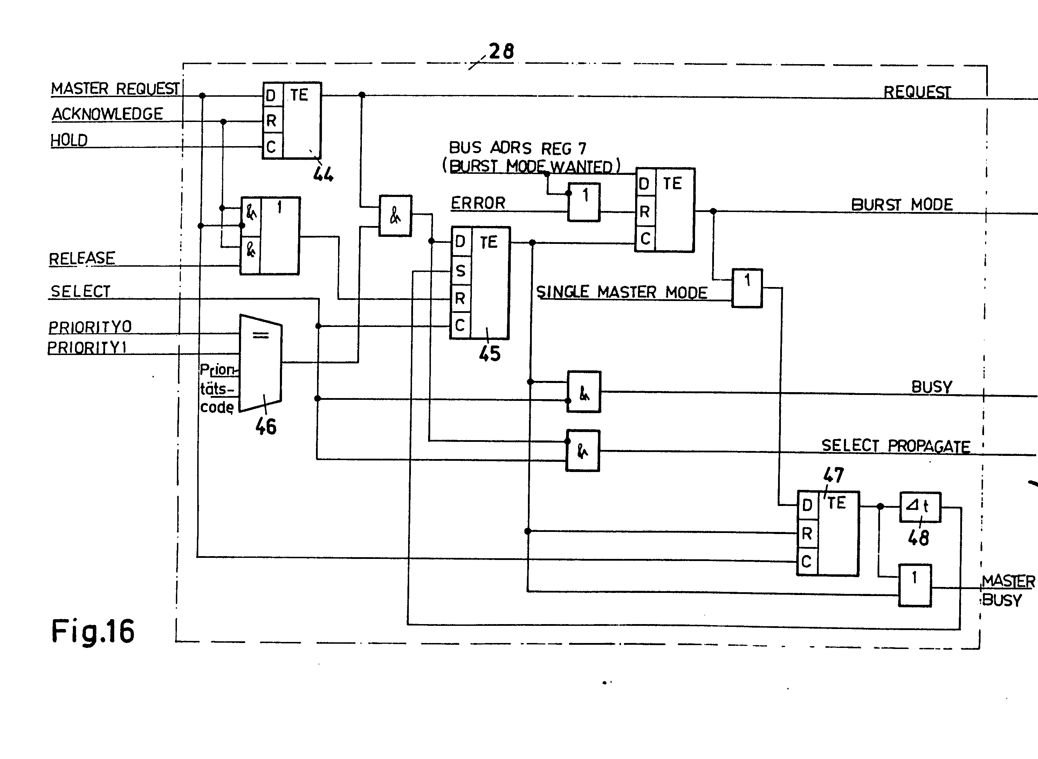

Fig. 16 zeigt die Struktur der Mastersteuerschaltung 28.
Das Anforderungssignal MASTER REQUEST der Decodierschaltung 24 wirkt auf ein Anforderungsflipflop 44, das ein
Anforderungssignal (REQUEST) des externen Bussystems
erregt. Die Masterauswahl selbst erfolgt mittels einer
"durchgeschleiften" Anforderungsleitung (SELECT, SELECT
PROPAGATE), wobei bei erfolgreicher Auswahl ein Auswahlflipflop 45 eingeschaltet wird, das seinerseits die
"Besetzt"-Leitung (BUSY) des externen Bussystems aktiviert.

Diese Wirkungsweise ist vom Prinzip her typisch für viele
Bussysteme, die im Zusammenhang mit der erfindungsgemäßen Anordnung einsetzbar sind. Das bevorzugte Bussystem
hat weiterhin folgende Merkmale, die im Zusammenhang mit
Fig. 16 von Interesse sind:

- Zum Einschalten der REQUEST-Leitung wird das Anforderungsflipflop 44 durch ein Gültigkeitssignal (HOLD)
  des Bussystems angesteuert. Request bleibt bis zum
  Ende des Buszyklus (signalisiert durch die Bestätigungsleitung ACKNOWLEDGE) aktiv.

- Die Anordnung kann nur dann ausgewählt werden, wenn
  eine fest eingestellte Priorität der Belegung von
  zwei Prioritätscodeleitungen (PRIORITY1, 0) entspricht.
  Dazu ist eine Vergleichsschaltung 46 vorgesehen.

- Die SELECT-Leitung wird mit einem impulsförmigen
  Signal erregt, das entweder weitergeleitet wird
  (SELECT PROPAGATE) oder zum Einschalten des Auswahlflipflops 45 führt. Dabei wird das "Besetzt"-Signal
  (BUSY) erst nach Abfall des SELECT-Impulses erregt.
  Hingegen wird ein Steuersignal MASTER BUSY sofort mit
  Einschalten des Auswahlflipflops 45 aktiv. Dieses
  Signal bewirkt die Steuerung der Koppelstufen für
  die Belegung des Bussystems.

  Damit bewirkt der SELECT-Impuls durch seine Breite
  auf einfache Weise das "deskewing" der Bussignale (Adressen- und ggf. Datensignale sind vor Erregen von
BUSY auf dem Bus wirksam).

- Das Auswahlflipflop 45 kann das Einschalten der Leitung BURST MODE veranlassen, sofern dies durch Bit 7 des BUS ADRS-Registers 16 gewünscht wird. Die Busleitung bleibt bis zum Ausschalten dieses Bits aktiv. Sie kann aber zwischenzeitlich durch Fehlersignale (ERROR) ausgeschaltet werden. Dies können sowohl interne als auch vom Slave empfangene Fehlersignale sein. Ist BURST MODE aktiv, erfolgt keine neue Masterauswahl, und erneute Anforderungssignale MASTER REQUEST schalten das Anforderungsflipflop 44 nicht ein.

Stattdessen wird ein zweites Anforderungsflipflop 47 erregt, das MASTER BUSY einschaltet und über eine Verzögerungsstufe 48 zur Gewährleistung des "deskewing" das Auswahlflipflop 45 einschaltet. Damit wird das Anforderungsflipflop 47 selbst wieder gelöscht.

Da SELECT stets inaktiv ist, führt das Einschalten des Auswahlflipflops 45 sofort zum Aktivieren der "Besetzt"-Leitung BUSY.

- Es ist möglich, durch ein schaltbares Signal SINGLE MASTER MODE den beschriebenen Ablauf unter Benutzung von Anforderungsflipflop 47 und Verzögerungsstufe 48 dauerhaft zu aktivieren. Damit wird eine externe Anregung der Masterauswahl (HOLD/REQUEST/SELECT-Folge) überflüssig. Diese besondere Betriebsart gestattet beispielsweise den Betrieb des Bussystems von der Anordnung aus ohne Rückgriff auf zentrale Steuermittel zu diagnostischen Zwecken bzw. den wirtschaftlichen Einsatz der Anordnung in kleineren Konfigurationen, die keinen "Multi-Master-Betrieb" erfordern.

Jeder Masterzyklus wird dadurch beendet, daß die Anordnung vom jeweiligen Slave entweder das Antwortsignal REPLY oder das Freigabesignal RELEASE empfängt und daß dazu das Bestätigungssignal ACKNOWLEDGE aktiv ist.

Bei Antwort mit REPLY wird Flipflop 39 zurückgesetzt und damit der Wartezustand der CPU 1 verlassen (Fig. 15). Dies führt zum Abfall des Anforderungssignals MASTER REQUEST (Fig. 14). Damit wird das Auswahlflipflop 45 gelöscht, wodurch BUSY abfällt und somit der Buszyklus beendet wird. Bei Antwort mit RELEASE wird nur das Auswahlflipflop 45 zurückgesetzt. Der Wartezustand und damit das Anforderungssignal MASTER REQUEST bleiben bestehen, so daß sich die Anordnung an weiteren Buszyklen beteiligen kann, bis die Anforderung durch eine REPLY-Antwort befriedigt wird.

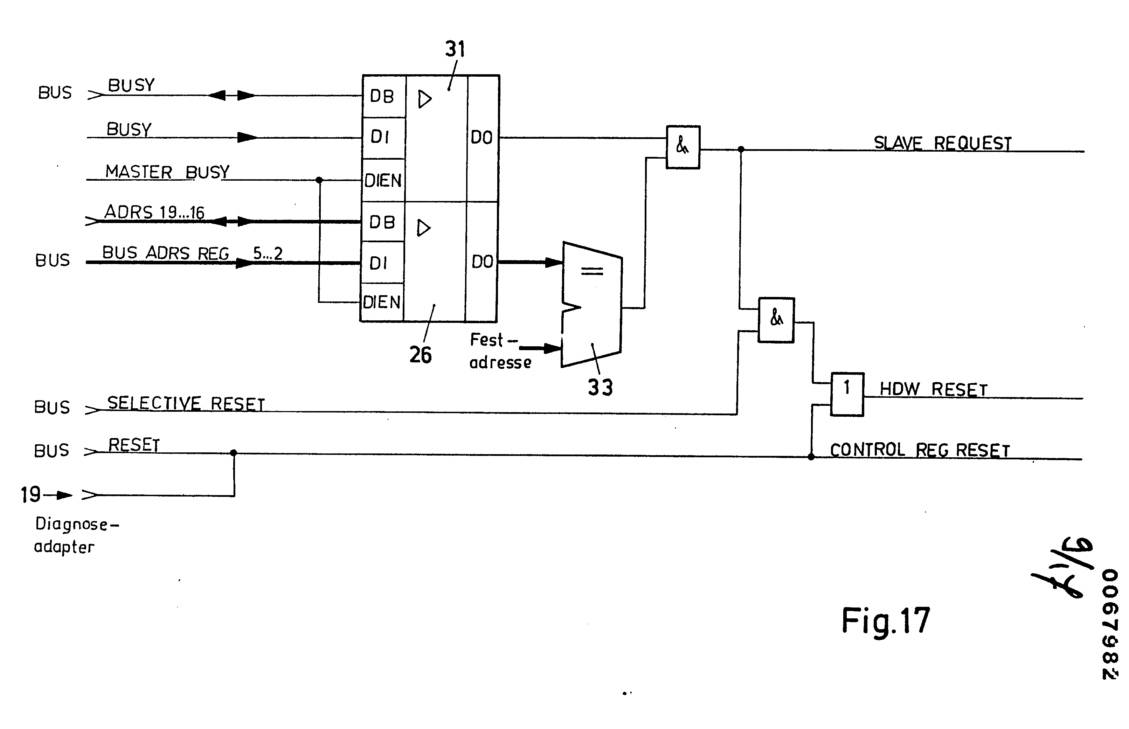

In Fig. 17 ist die Erkennung von Slaveanforderungen dargestellt. Dazu ist das Anforderungssignal SLAVE REQUEST in konjunktiver Verknüpfung dem Ausgang des Teils der Koppelstufen 31, der das BUSY-Signal mit dem externen Bussystem verbindet, und dem Ausgang des Adressenvergleichers 33 nachgeschaltet. Der Adressenvergleicher 33 ist mit den Teilen der Koppelstufen 26 verbunden, die die höchsten 4 Bits der Adressenleitungen (ADRS 19 - 16) mit dem externen Bussystem verbinden. Beide Teile der Koppelstufen 26, 31 befinden sich in der Betriebsart "Empfangen vom externen Bussystem", so daß bei Gleichheit der vom Bus gelieferten Adressensignale mit einer eingestellten Festadresse das Signal BUSY das Einschalten von SLAVE REQUEST veranlaßt.

Weiterhin ist aus Fig. 17 ersichtlich, daß bei Masterzugriffen die beiden Teile der Koppelstufen 26, 31 durch das MASTER BUSY-Signal in die Betriebsart "Belegen des externen Bussystems" umgesteuert werden.

Schließlich zeigt Fig. 17 die Bildung der Rücksetzsignale für die Hardware.

Die Rücksetzimpulse werden vom externen Bussystem geliefert. RESET wird in allgemeinen Anfangssituationen aktiv, z. B. beim Netzeinschalten. Weiterhin kann dieses Signal von dem ansteckbaren Diagnoseadapter geliefert werden. SELECTIVE RESET wirkt nur in konjunktiver Verknüpfung mit dem SLAVE REQUEST-Signal, also selektiv nur dann, wenn die Anordnung über den Bus als Slave ausgewählt wurde. Dieses Signal wird abgegeben, wenn in der Anordnung bestimmte Abläufe erzwungen werden sollen, beispielsweise im Rahmen einer Fehlerbehandlung im Gesamtsystem. Bei jedem Rücksetzen wird das Signal HDW RESET wirksam. Es veranlaßt ein Rücksetzen der gesamten Anordnung mit Ausnahme des CONTROL-Registers 15.

Das Signal CONTROL REG RESET veranlaßt das Rücksetzen des CONTROL-Registers 15. Bei jedem Rücksetzen beginnt die CPU 1 die Programmarbeit von Adresse 0 an mit Programmen aus dem ROM 10. Dabei handelt es sich beim allgemeinen Rücksetzen um den ersten Bereich des ROM 10, der im allgemeinen die initialen Testroutinen enthält. Beim selektiven Rücksetzen, das nur dann abgegeben wird, wenn sich das System in seinem normalen Betriebszustand befindet, wird das CONTROL-Register 15 nicht gelöscht. Im normalen Betriebszustand ist das INITIALIZED-Bit stets gesetzt, so daß die Programmabarbeitung ab Adresse 0 des zweiten Bereichs des ROM 10 beginnt. Dieser enthält im allgemeinen Fehlerbehandlungs- und Wiederanlaufroutinen.

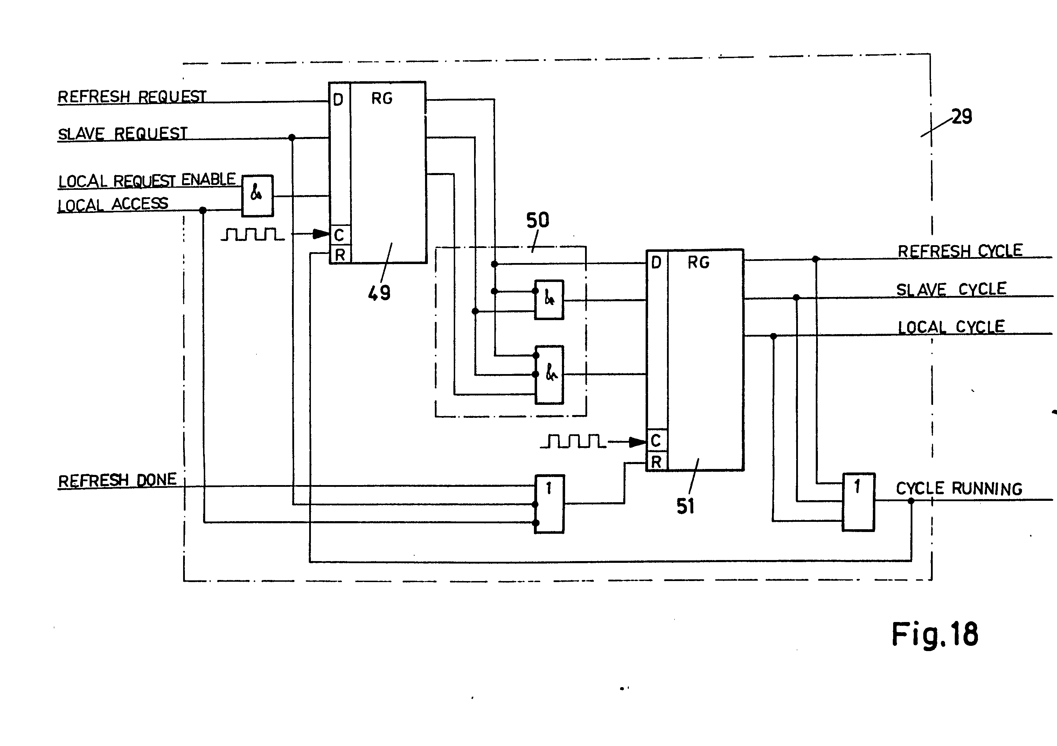

Fig. 18 zeigt den Aufbau der Vermittlungsschaltung 29, die als Prioritätsvermittlung ausgebildet ist. Alle Anforderungssignale werden gemeinsam in ein Anforderungsregister 49 aufgenommen, das über ein Prioritätsnetzwerk 50 mit einem Zyklusregister 51 verbunden ist.

In fallender Reihenfolge ihrer Priorität geordnet, gibt es folgende Anforderungen:

1. REFRESH REQUEST. Das Signal stammt von dem Refreshadressenzähler 34 und wird zyklisch etwa alle 12 µsec abgegeben. Es veranlaßt die Ausführung eines REFRESH CYCLE.

2. SLAVE REQUEST. Die Bildung dieses Signals wurde bereits anhand von Fig. 17 beschrieben. Es veranlaßt die Ausführung eines SLAVE CYCLE.

3. Lokale Anforderung. Diese entsteht durch konjunktive Verknüpfung von LOCAL ACCESS aus der Decodierschaltung 24 mit dem Erlaubnissignal LOCAL REQUEST ENABLE aus der Mastersteuerschaltung 28. Es wird die Ausführung eines LOCAL CYCLE veranlaßt.

Das Zyklusregister 51 führt entweder kein aktives Ausgangssignal, oder es ist jeweils eines der drei Ausgangssignale aktiv. CYCLE RUNNING ist das Sammelsignal, das angibt, daß ein Zyklus ausgeführt wird. Es veranlaßt das Löschen des Anforderungsregisters 49 und das Starten der Ablaufsteuerung 30. Dort laufen alle Zyklen im Prinzip gleichartig ab. Die Zyklussteuersignale

- REFRESH CYCLE
- SLAVE CYCLE
- LOCAL CYCLE

dienen zur entsprechenden Steuerung der Daten- und Adressenpfade.

Das Zyklusregister 51 wird nur dann gelöscht, wenn der betreffende Zyklus beendet ist.

Bei REFRESH CYCLE wird dies durch das interne Steuersignal REFRESH DONE signalisiert.

Bei SLAVE CYCLE wird dies bewirkt, indem SLAVE REQUEST infolge des Ausschaltens von BUSY inaktiv wird.

Bei LOCAL CYCLE wird dies bewirkt, indem LOCAL ACCESS abfällt, weil durch das Ausschalten des Wartezustandes der CPU 1 deren Anforderung befriedigt ist.

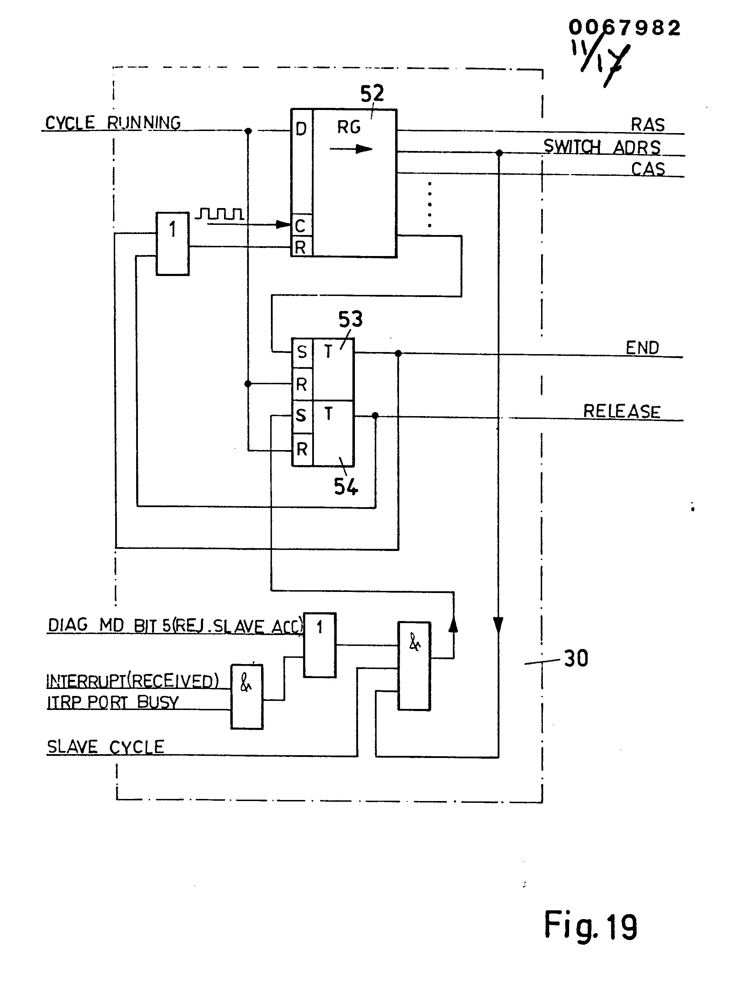

Fig. 19 zeigt den Aufbau der Ablaufsteuerschaltung 30. Es ist ein Schieberegister 52 vorgesehen, dem ein END-Flipflop 53 und ein RELEASE-Flipflop 54 nachgeordnet sind. Das Schieberegister 52 übernimmt das Sammelsignal CYCLE RUNNING aus der Vermittlungsschaltung 29 und erzeugt daraus die erforderlichen Steuersignale durch zeitliche Verzögerung. Nach Abgabe aller Steuersignale wird das END-Flipflop 53 eingeschaltet. Dieses bewirkt das Rücksetzen des Schieberegisters 52 sowie das Beenden des Zyklus durch folgende Wirkungen:

- bei REFRESH CYCLE durch Erregen des Signals REFRESH DONE (hier nicht näher dargestellt), um das Zyklusregister 51 zu löschen,
- bei SLAVE CYCLE das Erregen der Antwortleitung REPLY des externen Bussystems,
- bei LOCAL CYCLE das Löschen des Flipflops 40 der Wartesignalschaltung 4, wodurch der Wartezustand der CPU 1 aufgehoben wird.

Das RELEASE-Flipflop 54 kann nur bei SLAVE CYCLE erregt werden. Der Erregungszeitpunkt liegt dabei bereits am Anfang des Zyklus. Das Einschalten des RELEASE-Flipflops 54 veranlaßt ebenfalls das Löschen des Schieberegisters 52. Das RELEASE-Flipflop 54 wird in folgenden Fällen gesetzt:

a) Im DIAG MODE-Register 14 ist das Bit 5 (REJECT SLAVE ACCESS) eingeschaltet, um alle Slavezugriffe abzuweisen.

b) Der Slavezugriff soll einen Interrupt in der CPU 1 über den E/A-Schaltkreis 9 auslösen (Leitung INTERRUPT aktiv), und der E/A-Schaltkreis 9 ist nicht in der Lage, den Interrupt anzunehmen (ITRP PORT BUSY).

Die vom Schieberegister 52 gelieferten Steuersignale dienen zur Ansteuerung des RAM 13, zur Erzeugung von Schreibimpulsen für die Register 14 ... 16, 18 usw.

Beim RAM 13 handelt es sich um eine Anordnung aus dynamischen 16 kBit-MOS-Speicherelementen, die eine zeitmultiplexe Adressenzuführung und verschiedene Strobeimpulse erfordern. Das Schieberegister liefert sowohl die Strobeimpulse (RAS, CAS) als auch das Adressenumschaltsignal (SWITCH ADRS) für die Auswahlschaltung 25.

Weiterhin werden aus nicht näher dargestellten kombinatorischen Verknüpfungen Taktimpulse für das RAM-
Ausgangsregister 17, RAM-Schreibimpulse und Ladeimpulse
für die verschiedenen anderen Register abgeleitet.

Die Umsteuerung der Daten- und Adressenpfade erfolgt
in jedem Zyklus durch die Ausgangssignale des Zyklusregisters 51. So werden durch die Auswahlschaltung 25
folgende Quellen für die Adressierung des RAM 13 bzw.
der Register 14 ... 16, 18 ausgewählt:

- bei REFRESH CYCLE der Refreshadressenzähler 34,
  - bei SLAVE CYCLE die Koppelstufen 26 für die Adressenleitungen 27 des externen Bussystems,
  - bei LOCAL CYCLE der Adressenbus 3 der CPU 1.

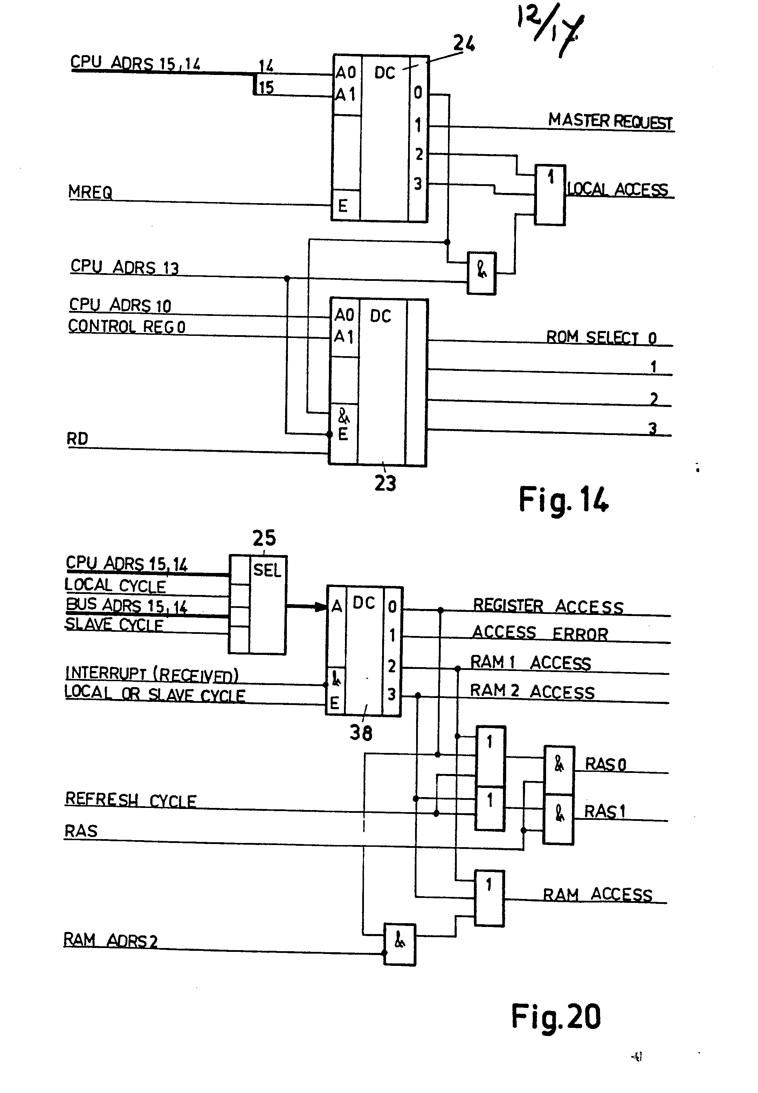

Dazu zeigt Fig. 20 einen Teil der Decodierschaltung 38
mit einem vorgeordneten Teil der Auswahlschaltung 25.
Es ist dies der Teil, in dem die höchstwertigen Adressenbits ausgewertet werden, um auszuwählen, ob zu den
Hardwareregistern oder zu den Blöcken des RAM 13 zugegriffen werden soll. Der Zugriff zu dem nicht definierten Adressenbereich führt zur Erregung des Fehlersignals ACCESS ERROR, welches an das HDW ERROR-Register
18 angeschlossen ist.

Der RAM 13 besteht aus zwei Blöcken zu je 16 kBytes, wobei die Auswahl durch selektiv wirkende Strobesignale
RAS0, RAS1 erfolgt.

Bei Refreshzugriffen werden beide Strobesignale gleichzeitig erregt.

Weiterhin wird RAS0 auch bei Registerzugriffen abgegeben. Charakteristisch ist, daß ein allgemeines Erlaubnissignal für RAM-Zugriffe (RAM ACCESS) durch disjunktive Verknüpfung der beiden selektiv wirkenden Strobesignale RAS0, RAS1 mit der konjunktiven Verknüpfung
des Registerzugriffssignals (REGISTER ACCESS) mit dem
niederwertigen Adressensignal RAM ADRS 2 der Auswahlschaltung 25 gebildet wird. Dieses allgemeine Erlaubnissignal RAM ACCESS steuert bei Schreiboperationen die
Abgabe von Schreibimpulsen für den RAM 13 und bei Leseoperationen das Laden des RAM-Ausgangsregisters 17 und
dessen Durchsteuern zu den Busleitungen 12.
Damit wird der parallele Zugriff zu den Registern
- CONTROL REG 15
- DIAG MODE REG 14
- BUS ADRS REG 16
- DIAGNOSTIC OUTPUT REG (auf externem Diagnoseadapter)
und den RAM-Zellen 8000H - 8003H ermöglicht.

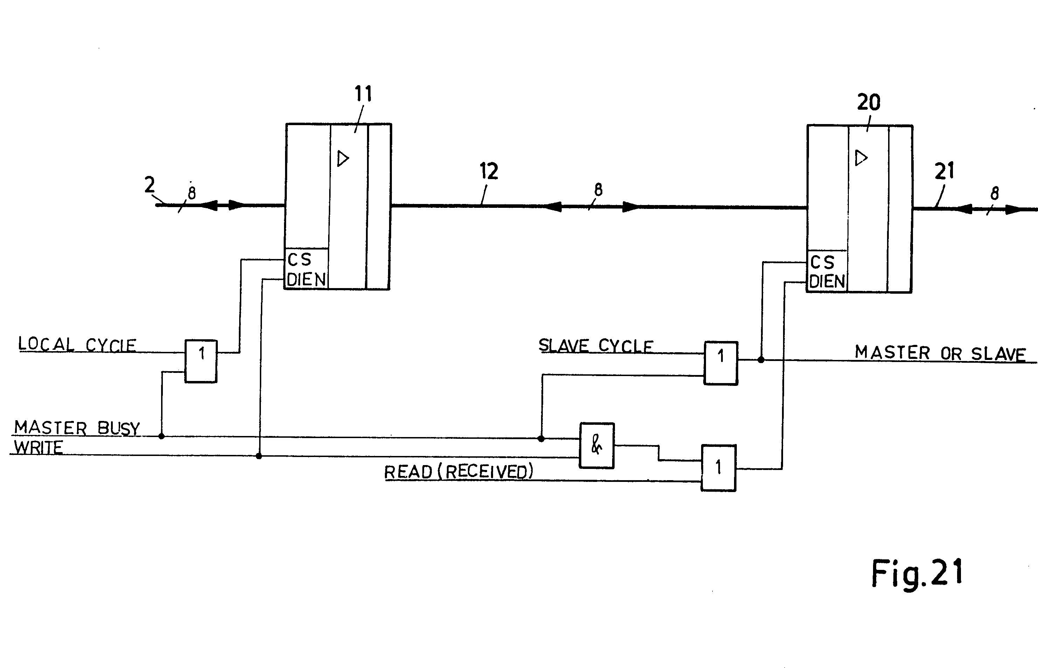

Fig. 21 zeigt die Verbindungen zwischen Datenbusleitungen 2 der CPU 1, den Busleitungen 12 und den Datenleitungen 21 des externen Bussystems über die Koppelstufen
11 und 20. Die Koppelstufe 11 wird zugeschaltet, wenn
die CPU 1 einen Zugriff ausführen will und entweder
die Mastersteuerschaltung 28 oder die Vermittlungsschaltung 29 das entsprechende Steuersignal MASTER BUSY oder
LOCAL CYCLE abgibt. Damit sind die Busleitungen 12
mit dem Datenbus 2 der CPU 1 verbunden. Die Richtung
des Informationstransportes wird durch die Belegung des
Schreibsignals WRITE der CPU 1 bestimmt. Die Koppelstufe
20 wird zugeschaltet, wenn die Verbindung mit dem externen Bussystem benötigt wird. Dies ist sowohl bei
Master- als auch bei Slavezugriffen der Fall (MASTER
BUSY oder SLAVE CYCLE). Die Richtung des Informationstransports wird bei Masterzugriffen vom Schreibsignal
WRITE der CPU 1 und bei Slavezugriffen vom empfangenen
Lesesignal des externen Bussystems READ (RECEIVED) bestimmt.
Damit tritt keine Beeinträchtigung der Arbeit der CPU 1
durch Slavezugriffe ein, wenn die CPU 1 Programme aus
dem ROM 10 abarbeitet.

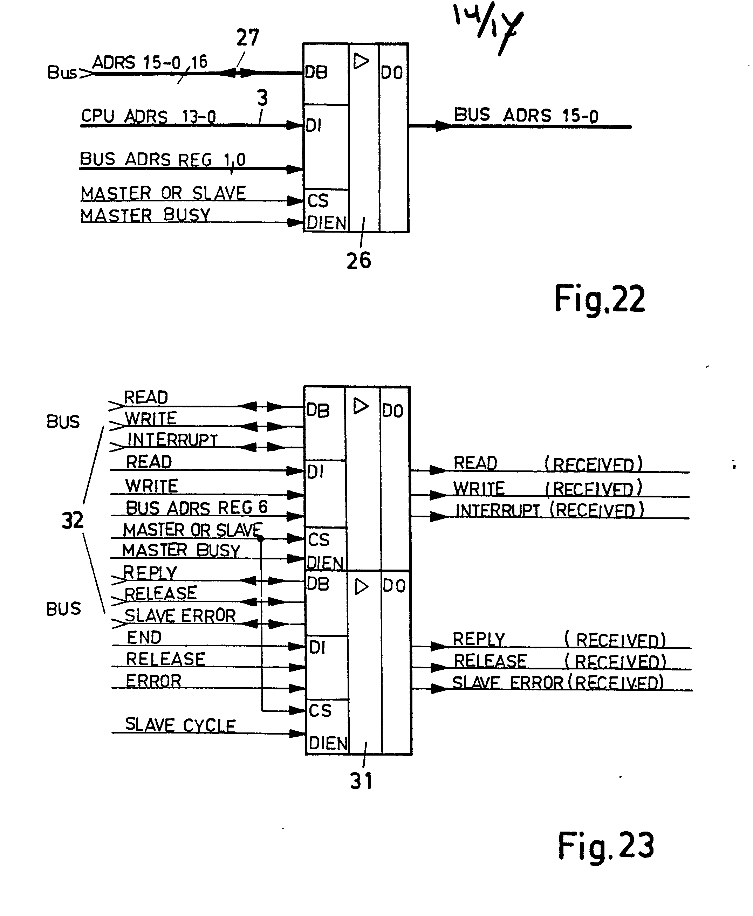

Fig. 22 veranschaulicht die Beschaltung der Koppelstufen 26 für die niederen 16 Bits der Adressenleitungen 27
des externen Bussystems (für die höheren 4 Bits ist dies bereits in Fig. 17 dargestellt).

Das externe Bussystem wird nur bei Masterzugriffen belegt. Die vom externen Bussystem gelieferten Adressen werden nur bei Slavezugriffen empfangen und zur Auswahlschaltung 25 geführt (BUS ADRS 15 - 0). Die Bildung des "enable"-Signals MASTER OR SLAVE ist aus Fig. 21 ersichtlich.

In Fig. 23 ist die Beschaltung von Teilen der Koppelstufen 31 für wesentliche Teile der Steuerleitungen 32 des externen Bussystems dargestellt.

Die Begleitsignale READ, WRITE, INTERRUPT werden genauso umgesteuert wie die Adressensignale in Fig. 22. Bei Masterzugriffen werden READ und WRITE direkt von der CPU 1 geliefert, und das Interruptsignal wird durch die Bitposition 6 des BUS ADRS-Registers 16 gebildet.

Die Beendigungssignale REPLY und RELEASE werden im Gegensatz dazu bei Slavezugriffen auf den Bus gelegt und bei Masterzugriffen vom Bus empfangen.

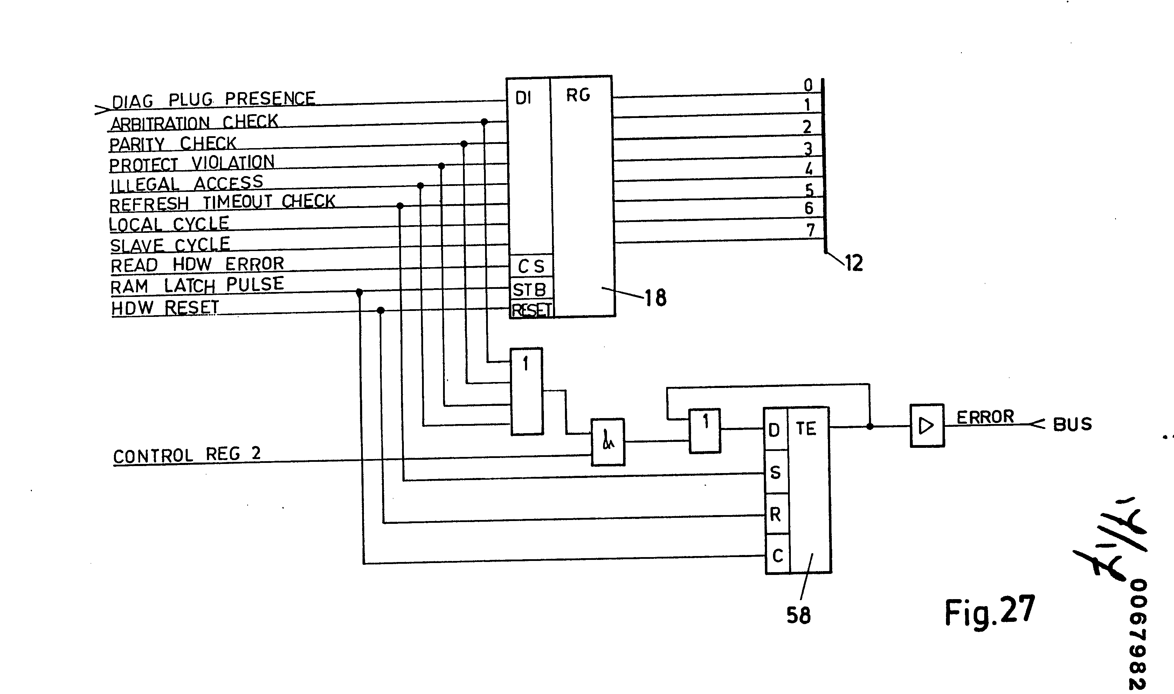

In gleicher Weise ist die Busleitung SLAVE ERROR angekoppelt. Bei Slavezugriffen wird sie vom Gesamtfehlersignal ERROR der Anordnung erregt (die Erläuterung dieses Signals wird anhand von Fig. 27 erfolgen). Bei Masterzugriffen kann das empfangene Signal SLAVE ERROR (RECEIVED) beispielsweise dazu benutzt werden, das BURST MODE-Signal auszuschalten (siehe dazu auch Fig. 16).

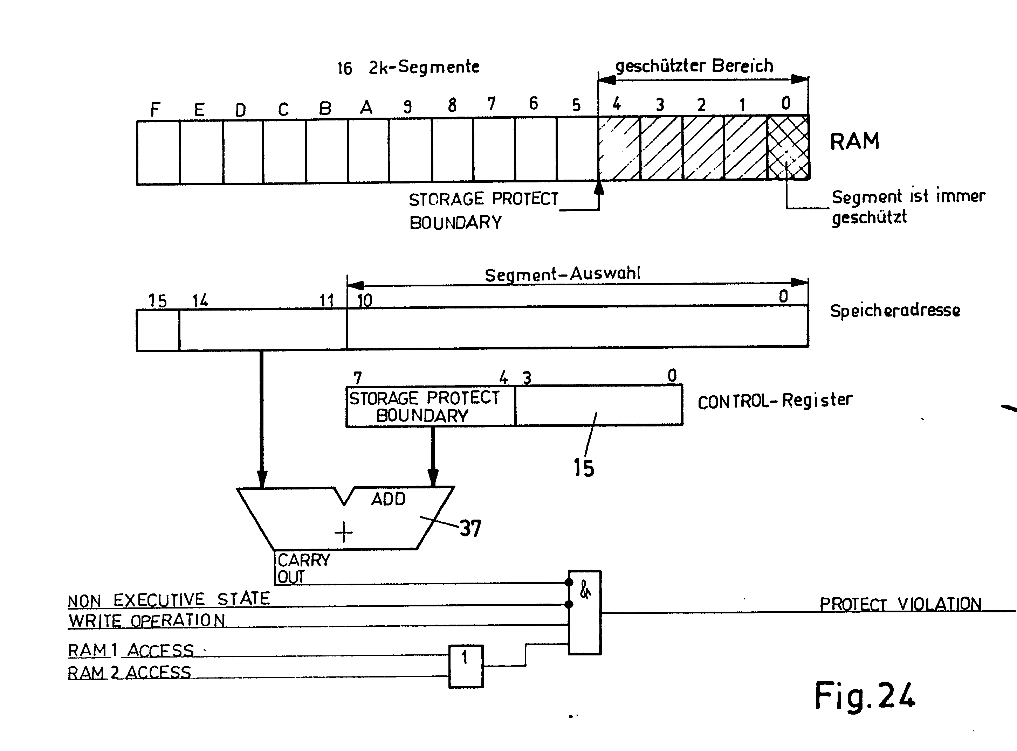

Fig. 24 veranschaulicht die Wirkungsweise der Speicherschutzeinrichtung 37.

Es handelt sich um ein Addierwerk, das die höchsten 4 Bits der RAM-Adresse (geliefert von der Auswahlschaltung 25) zu den höchsten 4 Bits des CONTROL-Registers 15 addiert. Der invertierte Ausgangsübertrag bildet das Fehlersignal PROTECT VIOLATION in konjunktiver Verknüpfung mit dem invertierten Ausgangssignal NON EXECUTIVE STATE des Flipflops 41 der Wartesignalschaltung 4, dem Schreibsteuersignal WRITE OPERATION und der disjunktiven Verknüpfung der RAM-Zugriffssignale RAM ACCESS 1, 2 aus der Decodierschaltung 38 gemäß Fig. 20.

Damit wird in folgenden Situationen in keinem Falle ein Fehler signalisiert:

a) Wenn durch die Busleitung NES der besondere Zustand "non executive state" im System eingestellt ist,

b) Wenn ein Schreiben in den RAM 13 parallel zum Laden eines Hardwareregisters erfolgt.

Ansonsten erfolgt der Speicherschutz dadurch, daß der RAM 13 in 16 Segmente zu je 2 kBytes eingeteilt wird. Um die ersten Segmente bis zum Segment n zu schützen, ist der invertierte Wert von n (n = 0 ... 15) in das STORAGE PROTECT BOUNDARY-Feld des CONTROL-Registers 15 zu laden.

Das Segment 0 ist immer geschützt. Es eignet sich daher vorzugsweise zur Unterbringung wichtiger konstanter Steuerinformationen für die Organisations- und Betriebssoftware.

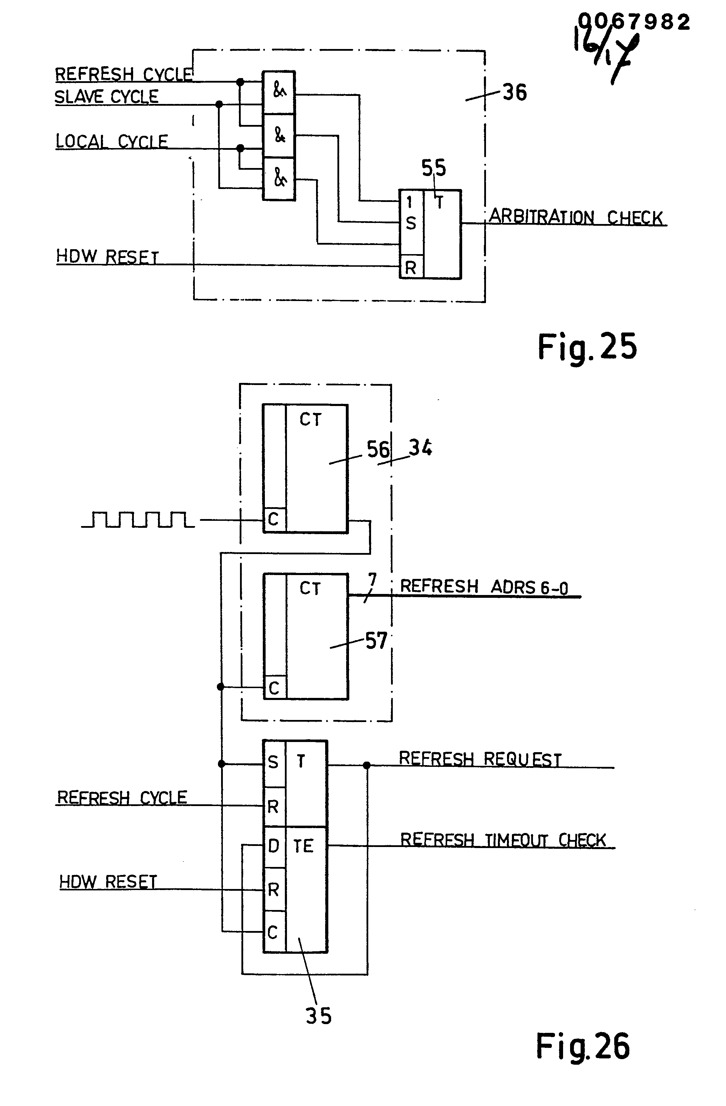

Fig. 25 zeigt die Ausgestaltung der Fehlererkennungsschaltung 36. Ein Vermittlungsfehler (ARBITRATION CHECK) wird erkannt, wenn das Zyklusregister 51 der Vermittlungsschaltung 29 mehr als ein Ausgangssignal führt. Dazu ist die Fehlererkennungsschaltung 36 als Koinzidenzdetektor ausgebildet. Dies wird durch die paarweise konjunktive Verknüpfung aller Ausgangssignale des Zyklusregisters 51 bewirkt, wobei alle diese konjunktiven Verknüpfungen disjunktiv einem Fehlerflipflop 55 vorgeordnet sind. Das Fehlerflipflop 55 ist an die Bitposition 2 des HDW ERROR-Registers 18 angeschlossen.

Fig. 26 zeigt die Ausgestaltung des Refreshadressenzählers 34 im Zusammenhang mit der Fehlererkennungsschaltung 35. Der Refreshadressenzähler 34 besteht aus zwei hintereinandergeschalteten Binärzählern 56, 57, die zyklisch weitergezählt werden. Der erste Binärzähler 56 liefert die Zeitintervalle der Refreshanforderungen

(etwa 12 μsec). In jedem dieser Intervalle wird der Binärzähler 57 um 1 erhöht. Damit wird die aktuelle Refreshadresse REFRESH ADRS 6 - 0 an die Auswahlschaltung 25 geliefert. Gleichzeitig wird dabei das Anforderungssignal REFRESH REQUEST für die Vermittlungsschaltung 29 aktiviert. Dieses wird wieder gelöscht, wenn die Vermittlungsschaltung 29 einen REFRESH CYCLE startet. Die Fehlererkennungsschaltung 35 besteht aus einem Flipflop, in dem beim Erregen von REFRESH REQUEST der vorhergehende Zustand dieses Signals übernommen wird. Damit entsteht ein Fehlersignal REFRESH TIMEOUT CHECK, wenn nach Ablauf eines Intervalls zwischen zwei Refreshzeitpunkten die vorhergehende Refreshanforderung noch nicht befriedigt wurde.

Fig. 27 zeigt die Beschaltung des HDW ERROR-Registers 18 und die Bildung des Gesamtfehlersignals.
Das HDW ERROR-Register 18 ist ein Schaltkreis mit unabhängig vom Ladetakt (RAM LATCH PULSE) steuerbaren Ausgängen, so daß die Information über die Busleitungen 12 sowohl von der CPU 1 als auch von anderen Einrichtungen über das externe Bussystem gelesen werden kann. Das HDW ERROR-Register 18 ist derart mit Fehler- und Zustandssignalen beschaltet, wie dies bereits anhand von Fig. 12 erläutert wurde.

Den disjunktiv verknüpften Fehlersignalen
- ARBITRATION CHECK aus Fehlererkennungsschaltung 36,
- PARITY CHECK aus dem Paritätsprüfer, der dem RAM 13 nachgeordnet ist,
- PROTECT VIOLATION aus der Speicherschutzeinrichtung 37
- REFRESH TIMEOUT CHECK aus der Fehlererkennungsschaltung 35
ist in konjunktiver Verknüpfung mit der Bitposition 2 des CONTROL-Registers 15 (ENABLE ERROR SIGNALIZATION) ein Fehlerflipflop 58 nachgeschaltet.
Dieses wird gesetzt, wenn ein Fehler auftritt und das Signalisieren der Fehlerbedingung erlaubt ist. Weiterhin besteht eine direkte Verbindung zu dem Fehlersignal REFRESH TIMEOUT CHECK, so daß diese Fehlerbedingung, die auf einen schwerwiegenden Schaden in der Anordnung schließen läßt, auch ohne das Erlaubnissignal aus dem CONTROL-Register 15 signalisiert wird. Die Signalisierung erfolgt über die Busleitung ERROR, die das Gesamtfehlersignal des Systems liefert. Zusätzlich wird, wenn der Fehler bei einem Slavezugriff auftritt, dieser über den in Fig. 23 dargestellten Teil der Koppelstufen 31 durch die Leitung SLAVE ERROR signalisiert. Im Rahmen des Gesamtsystems besteht die Konvention, daß Fehler in den einzelnen Anordnungen durch eine dafür besonders ausgestaltete Anordnung behandelt werden. Diese Anordnung analysiert die jeweilige Fehlersituation und veranlaßt in der Regel einen Wiederanlauf in der Anordnung, die den Fehler signalisiert hat, durch Übertragen von Wiederanlaufparametern und Auslösen eines selektiven Rücksetzens.

Die Abarbeitung der Wiederanlaufroutinen beginnt damit im zweiten Teil des ROM 10. Damit die Fehleranalyse ungestört ablaufen kann, wird im allgemeinen durch das Einschalten von ERROR sofort das Einschalten der NES-Leitung des externen Bussystems veranlaßt. Dies führt zum Aktivieren des Wartezustandes "non executive state" in der Wartesignalschaltung 4. Damit bleibt der fehlerhafte Zustand für die Analyse erhalten, und die "Ausbreitung" des Fehlers wird verhindert.

Die Besonderheiten und Vorteile der erfindungsgemäßen Anordnung können wie folgt zusammengefaßt werden:
1. Es ist eine elementare Mikrorechneranordnung als "hard core" realisiert (CPU 1, E/A-Schaltkreise 5 ... 9, ROM 10). Diese ist in sich funktionsfähig im Rahmen der Konventionen und des Leistungsumfanges des Mikroprozessorschaltkreissystems. Die Interruptbehandlung erfolgt vollständig in diesem Rahmen, gleichgültig, ob Interrupts von angeschlossenen peripheren Einrichtungen oder über das externe Bussystem signalisiert werden. Das Leistungsvermögen der E/A-Schaltkreise 5 ... 9 kann vollständig ausgenutzt werden, so daß eine kostengünstige Steuerung
auch komplexer und schneller peripherer Einrichtungen
(z. B. von Floppy Disc-Laufwerken) möglich ist.
Bei Steuerung derartiger Abläufe mit Programmen aus dem
ROM 10 können andere Einrichtungen praktisch konfliktfrei zum RAM 13 zugreifen. Weiterhin erlaubt dieser "hard
core" einen aufbauenden Test der verbleibenden Schaltmittel mit ROM-residenten Testroutinen.
2. Es sind zwei unabhängige Möglichkeiten für Operationen
der Art "Test & set" vorgesehen:
a) in anderen Anordnungen durch Buszugriffe im "burst
   mode"
b) in der Anordnung selbst durch Abweisung von Buszugriffen (DIAG MODE-Register 14, Bit 4 REJECT SLAVE ACCESS).
Damit können Speicherbereiche zur Steuerung des "multiprogramming", zur Verwaltung von Ressourcen etc. sowohl im
lokalen RAM 13 als auch in Speichermitteln anderer Einrichtungen des Systems untergebracht werden. Weiterhin
kann damit jede der Anordnungen über ein eigenes Betriebssystem verfügen.
3. Über das externe Bussystem läßt sich ein Wartezustand
"non executive state" für Zwecke der Initialisierung,
Fehlerbehandlung usw. erzwingen. Andererseits ist es
möglich, für zeitkritische Abläufe externe Wartebedingungen programmtechnisch zu unterdrücken (DIAG MODE-Register
14, Bit 5 SUPPRESS EXTERNAL WAIT CONDS).
Damit ist es möglich, die Anordnung sowohl für komplexe
Verarbeitungsaufgaben, bei denen eine unmittelbare Fehlerbehandlung sehr erwünscht ist, um eine Ausbreitung
des Fehlers (d. h. weitere Auswirkungen) sofort zu verhindern als auch für schnelle E/A-Steueraufgaben einzusetzen, wobei die Fehlerbehandlung an sich bis zum Ende der Informationsübertragung verschoben werden muß, weil die physikalischen Eigenschaften der peripheren Einrichtung (in mechanischer Bewegung befindliche Drucker, Floppy Disc-Laufwerke etc.) eine Unterbrechung des Datenstromes nicht zulassen. Die Umschaltung zwischen diesen beiden Einsatzfällen ist zudem noch durch Umladen des DIAG MODE-Registers dynamisch, d. h. je nach auftretender Situation im laufenden Betrieb, möglich.

4. Der durch die CPU 1 gegebene Adressenraum kann unabhängig für den ROM 10 und andere Speichermittel (RAM 13 sowie über den Bus zugängliche externe Speichermittel) erweitert werden (Bit 0 des CONTROL-Registers 15 und BUS ADRS-Register 16). Durch die Steuerung der Rücksetzsignale für das CONTROL-Register 15 werden je nach Situation initiale Testroutinen oder Fehlerbehandlungsbzw. Wiederanlaufroutinen im ROM 10 direkt ausgelöst.

5. Für die initialen Testroutinen in ROM 10 ist eine einfache Auslöse-und Anzeigemöglichkeit in Form eines ansteckbaren Diagnoseadapters gegeben. Damit können Tests ausgelöst werden, auch wenn die Anordnung in ein System eingebaut ist und das externe Bussystem bzw. E/A-Anschlüsse fehlerverdächtig sind. Dies erspart in vielen Fällen teure externe Prüfmittel (z. B. Logikanalyzer).

6. Es sind Fehlererkennungsschaltungen eingebaut, die kritische Hardwarefehler (inkorrekte Parität im RAM 13, Vermittlungsfehler, Zeitüberschreitungsfehler beim RAM-Refresh) sowie Fehler erkennen, die ihre Ursache sowohl in Hardwareausfällen als auch in inkorrekter Software haben können (Speicherschutzfehler, illegaler Zugriff). Damit kann die Anordnung auch im Rahmen von Systemen eingesetzt werden, für die extreme Zuverlässigkeitsforderungen gestellt werden.

Weiterhin wird die Testphase bei komplexen Systemen wesentlich vereinfacht, da Fehler, die sich bei üblichen Mikrorechnersystemen unbemerkt ausbreiten können, durch die vorgesehenen Schaltmittel sofort lokalisiert werden. Dabei wird die Behandlung von Fehlern durch andere Einrichtungen ermöglicht. Dies bedeutet eine größere Zuverlässigkeit als eine interne Fehlerbehandlung mit der selbst fehlerverdächtigen Hardware.

7. Die zusätzlich eingeführten Register, durch deren Verbindungen mit anderen Schaltmitteln ein großer Teil der spezifischen Eigenschaften der Anordnung realisiert wird, können mit einfachen Mitteln realisiert werden. Durch die Vorkehrung, automatisch Kopien der wesentlichen Register im RAM 13 zu halten, können trotzdem alle Befehle der CPU 1 auf diese Register angewendet werden (Erhöhen, Vermindern, Bits setzen, Bits löschen, Bits abfragen), so daß sich eine effektive Software für die Betriebssteuerung angeben läßt. Damit können mit der erfindungsgemäßen Anordnung Systeme kostengünstig auf Mikrorechnerbasis realisiert werden, die ansonsten wesentlich aufwendigere Schaltmittel (spezielle Steuerwerke, Minicomputer u. dgl.) erfordern, bzw. es kann der Gesamtaufwand durch Verringerung der Anzahl der Mikrorechneranordnungen drastisch gesenkt werden. Die bisher bekannten Mikrorechneranordnungen erfordern, daß für komplexere Systeme unabhängige Ein/Ausgaberechner, Verarbeitungsrechner usw. vorgesehen werden, wozu meistens noch ein übergeordneter Verwaltungsrechner erforderlich ist, der das Betriebssystem enthält. Im Gegensatz dazu kann die erfindungsgemäße Anordnung je nach aktueller Situation als Ein/Ausgabe- oder als Verarbeitungsrechner arbeiten, jede dieser Anordnungen in einem System kann ein eigenes Betriebssystem enthalten, und alle Speichermittel des Systems sind untereinander erreichbar.

Patentansprüche

1. Mikrorechneranordnung, vorzugsweise für den Einsatz in Multimikrorechnersystemen, bei denen derartige Anordnungen untereinander und mit anderen Einrichtungen über einen gemeinsamen Zeitmultiplexbus (externes Bussystem) verbunden sind und die aus einer Verarbeitungseinheit (CPU), aus Ein/Ausgabeschaltkreisen, aus Nur-Lese-Speichern (ROM) und aus Lese/Schreibspeichern (RAM) besteht, in der ein interner Datenbus und ein interner Adressenbus vorgesehen ist und die dazu ausgebildet ist, am gemeinsamen Zeitmultiplexbus sowohl als Master als auch als Slave arbeiten zu können, wozu eine Masteranforderungsschaltung, eine Vermittlungsschaltung mit nachgeordneter Ablaufsteuerschaltung sowie entsprechende Koppelstufen für das externe Bussystem vorgesehen sind, dadurch gekennzeichnet, daß zwischen dem internen Datenbus (2) und den Koppelstufen (20) für die Datenleitungen (21) des externen Bussystems Busleitungen (12) angeordnet sind, an die neben dem RAM (13) zusätzlich Steuerregister (14, 15), ein Busadressenregister (16) sowie ein Fehlerregister (18) angeschlossen sind und die an einen externen Anschluß (19) geführt sind, daß diese Busleitungen (12) mit Eingängen eines der E/A-Schaltkreise (9) verbunden sind, daß die Koppelstufen (26) für die Adressenleitungen (27) des externen Bussystems in ihren niederen Positionen mit Teilen des internen Adressenbus (3) und in ihren höheren Positionen mit Teilen des Busadressenregisters (16) beschaltet sind, daß den Adresseneingängen des RAM (13) eine Auswahlschaltung (25) vorgeordnet ist, die mit Ausgangssignalen der Koppelstufen (26) sowie mit Teilen des internen Adressenbus (3) verbunden ist, daß dieser Auswahlschaltung (25) weiterhin eine Decodierschaltung (38) nachgeordnet ist, an die die Auswahlsignale des RAM (13) sowie der genannten Register (14, 15, 16, 18) angeschlossen sind, daß der CPU (1) eine Wartesignalschaltung (4) vorgeordnet ist, die mit Ausgangssignalen einer am internen Adressenbus (3) angeschlossenen Decodierschaltung (24), die sowohl mit der Masteranforderungsschaltung (28) als auch mit der Vermittlungsschaltung (29) verbunden ist, mit Ausgangssignalen der Vermittlungsschaltung (29) sowie der Ablaufsteuerschaltung (30), mit Teilen der Steuerregister (14, 15) sowie über Koppelstufen (31) mit Teilen der Steuerleitungen (32) des externen Bussystems und mit Wartesignalen eines Teiles der E/A-Schaltkreise (6) beschaltet ist, daß weitere Teile der Steuerregister (14, 15) mit der Ablaufsteuerschaltung (30) verbunden sind und daß dem Fehlerregister (18) Fehlererkennungsschaltungen (35, 36), eine Speicherschutzeinrichtung (37) sowie Steuersignale der Vermittlungsschaltung (29) vorgeschaltet sind.

2. Anordnung nach Anspruch 1, dadurch gekennzeichnet, daß die Decodierschaltung (38) derart ausgebildet ist, daß disjunktive Verbindungen von Auswahlsignalen eines Teiles der Register (14, 15, 16) und von Auswahlsignalen für definierte Speicherplätze des RAM (13) vorgesehen sind.

3. Anordnung nach Anspruch 1, dadurch gekennzeichnet, daß die Vermittlungsschaltung (29) als Prioritätsvermittlung ausgebildet ist, daß deren Ausgängen eine der Fehlererkennungsschaltungen (36) nachgeordnet ist und daß diese Fehlererkennungsschaltung (36) als Koinzidenzdetektor für die Ausgangssignale der Vermittlungsschaltung (29) ausgebildet ist.

4. Anordnung nach Anspruch 1, dadurch gekennzeichnet, daß die Wartesignalschaltung (4) derart ausgebildet ist, daß das Wartesignal für die CPU (1) durch die disjunktive Verknüpfung der Ausgangssignale von vier Flipflops (39 ... 42) und dem Wartesignal eines Teiles der E/A-Schaltkreise (6) gebildet wird, wobei die Flipflops (41, 42) mit Teilen der Steuerleitungen (32) des externen Bussystems beschaltet sind, daß in den Verbindungen dieser Flipflops (41, 42) zum Wartesignal der CPU (1) eine konjunktive Verknüpfung mit einer Bitposition eines der Steuerregister (14) angeordnet ist, daß die beiden anderen Flipflops (39, 40) mit Ausgangssignalen der Decodierschaltung (24) beschaltet sind, daß das erste dieser Flipflops (39) mit den Antwort- und Bestätigungssignalen der Steuerleitungen (32) des externen Bussystems beschaltet ist und daß das zweite dieser Flipflops (40) mit Ausgangssignalen der Vermittlungsschaltung (29) und der Ablaufsteuerschaltung (30) verbunden ist.

5. Anordnung nach Anspruch 1 dadurch gekennzeichnet, daß die Verbindungen zwischen den Steuerregistern (14, 15) und der Ablaufsteuerschaltung (30) derart ausgebildet sind, daß eine Verknüpfung einer Bitposition eines der Steuerregister (14) mit einem Eingangssignal eines Flipflops (54) vorgesehen ist, dem das Freigabesignal der Steuerleitungen (32) des externen Bussystems nachgeschaltet ist.

6. Anordnung nach Anspruch 1, dadurch gekennzeichnet, daß die Koppelstufen (11, 20) für die Verbindung zwischen dem Datenbus (2) der CPU (1), den Busleitungen (12) und den Datenleitungen (21) des externen Bussystems derart ausgebildet sind, daß den Steuereingängen der ersten Koppelstufe (11) das Schreibsteuersignal der CPU (1) sowie Steuersignale der
Masteranforderungsschaltung (28) und der Vermittlungsschaltung (29) vorgeschaltet sind und daß die
Steuereingänge der zweiten Koppelstufe (20) mit
dem Schreibsteuersignal der CPU (1) in konjunktiver
Verknüpfung mit dem Steuersignal der Masteranforderungsschaltung (28) sowie mit dem damit disjunktiv verknüpften Lesesteuersignal bei Slavezugriffen des
externen Bussystems und mit der disjunktiven Verknüpfung von Steuersignalen der Masteranforderungsschaltung (28) und der Vermittlungsschaltung (29)
beschaltet sind.

7. Anordnung nach Anspruch 1, dadurch gekennzeichnet,
daß die Rücksetzsignale für die Hardware der Anordnung derart ausgestaltet sind, daß alle Schaltmittel
einschließlich des Steuerregisters (15) an eine
Rücksetzleitung angeschlossen sind, die mit dem
externen Bussystem und dem diagnostischen Anschluß
(19) verbunden ist und daß alle Schaltmittel mit
Ausnahme des Steuerregisters (15) an ein weiteres
Rücksetzsignal angeschlossen sind, das aus der konjunktiven Verknüpfung des Slaveanforderungssignals
aus dem Adressenvergleicher (33) mit einer weiteren
Rücksetzleitung des externen Bussystems gebildet
wird.

Fig.1

```
 15   14   13  12                                    0
┌──────────────┬──────────────────────────────────────┐
│              │                                      │
└──────────────┴──────────────────────────────────────┘
  Auswahl
  zwischen
  ROM/RAM/
  Register-und
  Bus-Zugriff
 ◄────────────►
```

**Fig.2**

```
 15        13  12   11   10  9                        0
┌───┬───┬───┬───┬───┬───┬─┬────────────────────────────┐
│ 0 │ 0 │ 0 │ X │ X │   │ │                            │
└───┴───┴───┴───┴───┴───┴─┴────────────────────────────┘
               ◄─Reserve─►   ◄─Adresse für ROM-Schaltkreis─►
                       └─── Schaltkreis-Auswahl
```

**Fig.3**

```
 15   14   13                     7  6                 0
┌───┬───┬──────────────────────────┬───────────────────┐
│ 1 │   │                          │                   │
└───┴───┴──────────────────────────┴───────────────────┘
        ◄──── COLUMN ADRS ────►   ◄──── ROW ADRS ────►
       └─── Schaltkreis-Auswahl
```

**Fig.4**

```
 15        13  12                            3  2      0
┌───┬───┬───┬───┬───┬───┬───┬───┬───┬───┬───┬──────────┐
│ 0 │ 0 │ 1 │ X │ X │ X │ X │ X │ X │ X │ X │ X │      │
└───┴───┴───┴───┴───┴───┴───┴───┴───┴───┴───┴──────────┘
                                            Register-
                                            Auswahl
                                          ◄──────────►
```

**Fig.5**

Adresse von CPU:

15  14  13                                    0

0  1

14-Bit-Adresse für Buszugriff

Bus—Adresse:

19          16  15      14  13                  0

Slave-Auswahl     16k-Segment-Asw.

7   6  5       2  1   0        BUS ADRS REG

Fig.6

0067982

0067982

4/7

STORAGE PROTECT BOUNDARY (bits 7–4)

— INITIALIZED
— ENABLE PARITY
— ENABLE ERROR SIGNALIZATION
— ENABLE COMPARE STOP

## Fig.7

Bits: 7 (X), 6 (X), 5, 4, 3, 2, 1, 0

— ENABLE INJECT
— INJECT HIGH/ FORCE EVEN PARITY
— STOP ON READ
— STOP ON WRITE
— REJECT SLAVE ACCESS
— SUPPRESS EXTERNAL WAIT CONDS

## Fig.8

Bits: 7, 6, 5–2, 1, 0

Adresse des Slave am Bus (bits 5–2)

— Adresse eines 16k-Segmentes im Adreßraum des Slave
— INTERRUPT
— BURST MODE WANTED

## Fig.9

0067982

5/17

7 6 5 4 3 2 1 0

G F E D C B A

0: rechte Anzeige
1: linke Anzeige

**Fig.10**

RESET

**Fig.11**

7 6 5 4 3 2 1 0

— DIAG PLUG PRESENCE
— ARBITRATION CHECK
— PARITY CHECK
— PROTECT VIOLATION
— ILLEGAL ACCESS
— REFRESH TIME OUT CHECK
— LOCAL CYCLE
— SLAVE CYCLE

**Fig.12**

| Register–Adresse | RAM–Position | Bitposition 7 | 6 | 5 | 4 | 3 | 2 | 1 | 0 | |
|---|---|---|---|---|---|---|---|---|---|---|
| 2000 H | 8000 H | STORAGE PROTECT BOUNDARY | | | | ENABLE CMP-STP. | ENABLE ERR-SIG. | ENABLE PARITY | INITIA-LIZED | CONTROL-Reg. 15 |
| 2001 H | 8001 H | X | X | SUPPR. EXT.W.C. | REJECT SLAVE ACC. | STOP ON WRITE | STOP ON READ | INJ. HI/ F. E.P. | ENABLE INJECT | DIAG MODE-Reg.-14 |
| 2002 H | 8002 H | BURSTMD WANTED | INTER-RUPT | Adresse des Slave am Bus | | | | Adresse eines 16 k–Segmentes | | BUS ADRS-Reg.-16 |
| 2003 H | 8003 H | linke Anzeige | G | F | E | D | C | B | A | DIAGNOSTIC OUTPUT-Reg. |

Fig.13

6/17

0067982

REPLY (RECEIVED)
ACKNOWLEDGE
MASTER REQUEST
LOCAL CYCLE
END
LOCAL ACCESS
BURST MODE (RECEIVED)
SLAVE CYCLE
NES
MASTER OR LOCAL CYCLE
DIAG MODE REG 5 (SUPPRESS EXTERNAL WAIT CONDS)
SIO WAIT

WAIT

LOCAL REQUEST ENABLE

Fig.15

0067982

Fig.16

Fig.17

Fig.18

Fig. 19

Fig. 14

Fig. 20

Fig.21

0067982

0067982

14/14

**Fig.22**

**Fig.23**

Fig.24

0067982

**Fig.25**

Labels in Fig.25: REFRESH CYCLE, SLAVE CYCLE, LOCAL CYCLE, HDW RESET, ARBITRATION CHECK, 36, 55

**Fig.26**

Labels in Fig.26: CT, 56, 34, 57, REFRESH ADRS 6-0, REFRESH REQUEST, REFRESH CYCLE, REFRESH TIMEOUT CHECK, HDW RESET, 35

0067982
16/17

Fig.27

DIAG PLUG PRESENCE
ARBITRATION CHECK
PARITY CHECK
PROTECT VIOLATION
ILLEGAL ACCESS
REFRESH TIMEOUT CHECK
LOCAL CYCLE
SLAVE CYCLE
READ HDW ERROR
RAM LATCH PULSE
HDW RESET

DI RG

0
1
2
3
4
5
6
7

12

CS
STB
RESET

18

CONTROL REG 2

1

1

D TE
S
R
C

ERROR < BUS

58

0067982